(19) **Europäisches Patentamt / European Patent Office / Office européen des brevets**

(11) **EP 4 245 062 B1**

(12) **EUROPEAN PATENT SPECIFICATION**

(45) Date of publication and mention of the grant of the patent:
**22.07.2026 Bulletin 2026/30**

(21) Application number: **20961478.3**

(22) Date of filing: **10.11.2020**

(51) International Patent Classification (IPC):
*H04W 28/16* (2009.01)   *H04L 12/40* (2006.01)
*H04W 4/24* (2024.01)   *H04W 28/20* (2009.01)
*H04W 28/08* (2023.01)   *H04M 15/00* (2024.01)
*H04L 12/14* (2024.01)

(52) Cooperative Patent Classification (CPC):
**H04W 28/20; H04L 12/1407; H04M 15/58; H04M 15/62; H04M 15/66; H04W 4/24; H04W 28/0908; H04W 28/0967**

(86) International application number:
**PCT/IN2020/050949**

(87) International publication number:
**WO 2022/101920 (19.05.2022 Gazette 2022/20)**

(54) **FIRST NODE, THIRD NODE, AND METHODS PERFORMED THEREBY, FOR HANDLING QUALITY OF SERVICE IN A COMMUNICATIONS NETWORK**

ERSTER KNOTEN, DRITTER KNOTEN UND DAMIT DURCHGEFÜHRTE VERFAHREN ZUR HANDHABUNG DER DIENSTGÜTE IN EINEM KOMMUNIKATIONSNETZWERK

PREMIER NOEUD, TROISIÈME NOEUD, ET PROCÉDÉS AINSI MIS EN OEUVRE, DESTINÉS À PRENDRE EN CHARGE LA QUALITÉ DE SERVICE DANS UN RÉSEAU DE COMMUNICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.09.2023 Bulletin 2023/38**

(73) Proprietor: **Telefonaktiebolaget LM Ericsson (publ)**
**164 83 Stockholm (SE)**

(72) Inventors:
• **MALAR MANI, Suganya**
  Chennai, 603103 (IN)
• **RAMASUBBU, Gopala Krishnan**
  Virudhunagar, 626103 (IN)
• **BHARTI, Chandan**
  Chennai, 600130 (IN)
• **THEKKAN, Natarajan**
  Dindigul, Tamil Nadu 624706 (IN)
• **NARASIMHAM, Settipalli**
  Chennai, 600096 (IN)

(74) Representative: **Zacco Sweden AB**
**P.O. Box 5581**
**Löjtnantsgatan 21**
**114 85 Stockholm (SE)**

(56) References cited:
WO-A1-2019/196796   US-A1- 2016 323 758
US-A1- 2018 262 924   US-B2- 8 867 390

• "3rd Generation Partnership Project; Technical Specification Group Services and System Aspects; Architecture enhancements for 5G System (5GS) to support network data analytics services (Release 16)", vol. SA WG2, no. V16.3.0, 27 March 2020 (2020-03-27), pages 1 - 62, XP051861086, Retrieved from the Internet <URL:ftp://ftp.3gpp.org/Specs/archive/23_series/23.288/23288-g30.zip 23288-g30.docx> [retrieved on 20200327]

## Description

### TECHNICAL FIELD

The present disclosure relates generally to a first node and methods performed thereby for handling quality of service in a communications network. The present disclosure relates generally to a third node and methods performed thereby for handling quality of service in the communications network.

### BACKGROUND

Computer systems in a communications network may comprise one or more nodes, which may also be referred to simply as nodes. A node may comprise one or more processors which, together with computer program code may perform different functions and actions, a memory, a receiving and a sending port. A node may be, for example, a server. Computer systems may be comprised in telecommunications network.

In the course of operations of a telecommunications network, data may be collected on the performance of the telecommunications network. As per the 5th generation (5G) service-based architecture, the 5G core network may provide Network data analytics function (NWDAF) and Management data analytics function (MDAF) interfaces for analytics information collection from different Network Functions (NFs). Network data analytics may be understood as a Network Function (NF) in the 5G core network which may interact with a Session Management Function (SMF) and a Policy control function (PCF) and other network functions for analytics data. Dynamic policy decisions and consumed data bandwidth for various subscribers may be analyzed and provide analytics-based data to an operator of a network using REpresentational State Transfer (REST) based service operations.

Framework is in place for telecommunication operators to use dynamic data consumption to make differential decisions. Also, Machine Learning (ML) and Artificial Intelligence (AI) tools may be used to create and deploy applications in the analytics engine to make the Intelligent networks (IN) truly intelligent.

### Internet of Things (IoT)

The Internet of Things (IoT) may be understood as an internetworking of communication devices, e.g., physical devices, vehicles, which may also referred to as "connected devices" and "smart devices", buildings and other items-embedded with electronics, software, sensors, actuators, and network connectivity that may enable these objects to collect and exchange data. The IoT may allow objects to be sensed and/or controlled remotely across an existing network infrastructure.

"Things," in the IoT sense, may refer to a wide variety of devices such as heart monitoring implants, biochip transponders on farm animals, electric clams in coastal waters, automobiles with built-in sensors, DNA analysis devices for environmental/food/pathogen monitoring, or field operation devices that may assist firefighters in search and rescue operations, home automation devices such as the control and automation of lighting, heating, e.g. a "smart" thermostat, ventilation, air conditioning, and appliances such as washer, dryers, ovens, refrigerators or freezers that may use telecommunications for remote monitoring. These devices may collect data with the help of various existing technologies and then autonomously flow the data between other devices.

It is expected that in a near future, the population of IoT devices will be very large. Various predictions exist, among which one assumes that there will be >60000 devices per square kilometer, and another assumes that there will be 1000000 devices per square kilometer. A large fraction of these devices is expected to be stationary, e.g., gas and electricity meters, vending machines, etc.

### Machine Type Communication (MTC)

Machine Type Communication (MTC) has in recent years, especially in the context of the Internet of Things (IoT), shown to be a growing segment for cellular technologies. An MTC device may be a communication device, typically a wireless communication device or simply user equipment, that is a self and/or automatically controlled unattended machine and that is typically not associated with an active human user in order to generate data traffic. An MTC device may be typically simpler, and typically associated with a more specific application or purpose, than, and in contrast to, a conventional mobile phone or smart phone. MTC involves communication in a wireless communication network to and/or from MTC devices, which communication typically may be of quite different nature and with other requirements than communication associated with e.g. conventional mobile phones and smart phones. In the context of and growth of the IoT, it is evident that MTC traffic will be increasing and thus needs to be increasingly supported in wireless communication systems.

With the growing need for Machine to Machine (M2M) communication in enterprises which use private and/or public networks, there is a possibility to experience machine-to-machine network congestions in addition to subscriber usage network congestion. In 5th generation (5G), Ultra-Reliable Low Latency (URLL) communication, for example, massive small devices connections to network are possible. Additionally, certain tracking areas may experience sudden congestion due to ongoing events and user density, such as major sports, cultural, political, social gatherings, food court, malls etc or just due to the intensity of device density. Whenever there is a such a gathering of many users, the Quality of Service (QoS) for a given tracking area may degrade, and data upload and/or download speeds may decrease. This will lead to customers being dissatisfied with the network and the data speed. Existing methods to manage network resources do not enable to secure the QoS by providing a guaranteed bitrate. Existing methods may therefore result in long latencies and failed communications, resulting in a poor operation of a communications network.

US8867390B2 discloses a method for adaptive bandwidth reallocation for quality of service policy of a dynamic communication link. A close-loop quality of service system is provided that collects real-time network performance indicators at the physical, data link and network layers. However, the patent does not describe how to improve handling quality of service in a communications network based on real-time user data.

WO 2019/196796 A1 discloses a core network device acquiring a policy parameter of a network slice. The core network device sending the policy parameter of the network slice to an access network device corresponding to the network slice, such that the access network device determines a relevant policy of the network slice according to the policy parameter of the network slice. However, the patent application does not describe how to improve handling quality of service in a communications network based on real-time user data.

The publication 3rd Generation Partnership Project; Technical Specification Group Services and System Aspects; Architecture enhancements for 5G System (5GS) to support network data analytics services (Release 16) discloses a method for QoS sustainability analysis that includes the NWDAF detecting the need for notification about a potential QoS change based on comparing the expected values for the KPI of the target 5QI against the reporting threshold provided by the customer in any cell in the requested area for the requested analytics target period. The publication does not disclosure consequential actions for a predicted QoS change and how to improve handling quality of service in a communications network based on real-time user data.

SUMMARY

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention.

It is an object of embodiments herein to improve the handling of quality of service in a communications network. According to a first aspect of embodiments herein, the object is achieved by a method, performed by a first node. The method is for handling quality of service in a communications network. The first node operates in the communications network. The first node determines, in real time, whether or not a respective quality of service threshold is predicted to be exceeded or underachieved in respective communications provided to one or more communication devices. The one or more communication devices operate in the communications network. The determining is based on one or more first indications received, in real time, from one or more second nodes operating in the communications network. The one or more first indications indicate, in real time, one or more respective quality of service parameters for the respective communications provided to the one or more communication devices. The first node then initiates a redistribution of a bandwidth available in the communications network to at least one of the one or more communication devices. The initiation of the redistribution is based on a result of the determination.

According to a second aspect of embodiments herein, the object is achieved by a method, performed by a third node. The method is for handling quality of service in the communications network. The third node operates in the communications network. The third node receives, in real time, a second indication from the first node operating in the communications network. The second indication indicates whether or not a respective quality of service threshold is predicted to be exceeded or underachieved in respective communications provided to one or more communication devices operating in the communications network. The third node then initiates a redistribution of the bandwidth available in the communications network to at least one of the one or more communication devices. The initiation of the redistribution is based on the received second indication.

According to a third aspect of embodiments herein, the object is achieved by the first node. The first node may be considered to be for handling the handling quality of service in the communications network. The first node is configured to operate in the communications network. The first node is further configured to determine, in real time, whether or not the respective quality of service threshold is predicted to be exceeded or underachieved in the respective quality of service threshold is predicted to be exceeded or underachieved in the respective communications configured to be provided to the one or more communication devices operating in the communications network. The determining is configured to be based on the one or more first indications configured to be received, in real time, from the one or more second nodes configured to operate in the communications network. The one or more first indications are configured to indicate, in real time, the one or more respective quality of service parameters for the respective communications provided to the one or more communication devices. The first node is also configured to initiate the redistribution of the bandwidth available in the communications network to at least one of the one or more communication devices. The initiation of the redistribution is configured to be based on the result of the determination.

According to a fourth aspect of embodiments herein, the object is achieved by the third node. The method may be understood to be for handling quality of service in the communications network. The third node is configured to operate in the communications network. The third node is further configured to receive, in real time, the second indication from the first node configured to operate in the communications network. The second indication is configured to indicate whether or not the respective quality of service threshold is predicted to be exceeded or underachieved in the respective communications configured to be provided to the one or more communication devices 30 configured to operate in the communications network. The third node is further configured to initiate the redistribution of the bandwidth available in the communications network to at least one of the one or more communication devices. The initiation of the redistribution is configured to be based on the second indication configured to be received.

By the first node determining, in real time, whether or not the respective quality of service threshold is predicted to be exceeded or underachieved in the respective communications provided to the one or more communication devices, the first node may be enabled to know whether a dynamic redistribution of bandwidth may need to be performed in real time in the communications network. By then initiating the redistribution of the bandwidth available, the first node may ultimately enable that better and guaranteed services may be provided to the one or more communication devices.

By receiving the second indication, the third node may be enabled to know whether or not the respective QoS threshold may be exceeded or underachieved in the respective communications provided to the one or more communication devices. This may in turn enable the third node 113 to know whether a dynamic redistribution of bandwidth may need to be performed in real time in the communications network to make sure a certain QoS is maintained.

By then initiating of the redistribution of the bandwidth, the third node may be enabled to manage the QoS provided in the communications network and ensure that a certain QoS is maintained, improving the usage of resources in the communications network by improving the efficiency with which they are used. This may be particularly relevant for use cases such as, e.g., massive IoT, Ultra-Reliable Low-Latency Communications (URLLC), cellular vehicle-to-everything (V2X), or other critical services.

BRIEF DESCRIPTION OF THE DRAWINGS

Examples of embodiments herein are described in more detail with reference to the accompanying drawings, according to the following description.

Figure 1    is a schematic diagram illustrating two non-limiting examples of a communications network, according to embodiments herein.
Figure 2    is a flowchart depicting a method in a first node, according to embodiments herein.
Figure 3    is a flowchart depicting a method in a third node, according to embodiments herein.
Figure 4    is a schematic diagram illustrating a non-limiting example of a communications network, according to embodiments herein.
Figure 5    is a schematic diagram illustrating another non-limiting example of a communications network, according to embodiments herein.
Figure 6    is a schematic diagram depicting aspects of the method performed by the first node and of the method performed by the third node, according to embodiments herein.
Figure 7    is a schematic diagram depicting aspects of an MDAS and an MDAF, according to embodiments herein.
Figure 8    is a schematic diagram depicting aspects of the method performed by the first node and of the method performed by the third node, according to embodiments herein.
Figure 9    is a schematic diagram depicting aspects of the method performed by the first node, according to embodiments herein.
Figure 10   is a schematic diagram depicting aspects of the method performed by the first node and of the method performed by the third node, according to embodiments herein.
Figure 11   is a schematic diagram depicting aspects of the method performed by the first node and of the method performed by the third node, according to embodiments herein.
Figure 12   is a schematic diagram depicting aspects of the method performed by the first node and of the method performed by the third node, according to embodiments herein.
Figure 13   is a schematic diagram depicting aspects of the method performed by the first node and of the method performed by the third node, according to embodiments herein.
Figure 14   is a schematic block diagram illustrating embodiments of a first node, according to embodiments herein.
Figure 15   is a schematic block diagram illustrating embodiments of a first node, according to embodiments herein.

DETAILED DESCRIPTION

As part of the development of embodiments herein, one or more problems with the existing technology will first be identified and discussed.

As mentioned in the Background section, it often happens that in crowded places the QoS decreases and there are multiple connection failures based on the number of people present in a particular area. Conversely, it may happen that utilization or data use for an area is significantly low. Currently, there is no mechanism available to provide an improved Guaranteed Bit rate (GBR) and QoS to subscribers. Some methods are available today to perform network data analytics. However, the current analytics techniques, e.g., of yield optimization, which may be applied in the 5G core network are not real-time and synchronized with the subscribers.

Currently, there is no mechanism to perform real time analytics in an area to change or control QoS. Further particularly, there is no analytics information gathered from a Policy Control Function (PCF) or a Session Management Function (SMF) to know the real time data consumption of users. While existing interfaces as defined e.g., in 3GPP TS 28.201, v. 2.0.0 describe network slice performance and analytics-based charging, and in TS 28.201, v. 2.0.0, a new network function, Charging Subscribing and Interaction Function (CSIF), is introduced, which subscribes for load information from a NWDAF, in the current 5GC 3GPP, the network function Converged Charging Function (CHF) which may be understood to provide both offline and online charging for 5G subscribers, does not interact with the NWDAF or the MDAF.

Certain aspects of the present disclosure and their embodiments address one or more of the issues with the existing methods and provide solutions to the challenges just discussed. In general terms, embodiments herein may be understood to be drawn to an intelligent, Machine Learning (ML)-based approach that may enable real-time analysis of usage of network resources, and management of the resources to improve the performance of the network in real-time.

Particularly, embodiments herein, may be understood to use 5th generation (5G) analytics based on real time gathering of QoS and GBR observed for ongoing Packet Data Protocol (PDP) sessions for certain subscribers, or per tracking area. More particularly, the 5G NWDAF network function may be used for collecting real time data from an SMF/User Plane Function (UPF), PCF and Application Function (AF) network functions. This information may be configured in a 5G Converged Charging Function (CHF) to obtain the set of user details using user subscriptions.

Several embodiments and examples are comprised herein. It should be noted that the embodiments and/or examples herein are not mutually exclusive. Components from one embodiment or example may be tacitly assumed to be present in another embodiment or example and it will be obvious to a person skilled in the art how those components may be used in the other exemplary embodiments and/or examples.

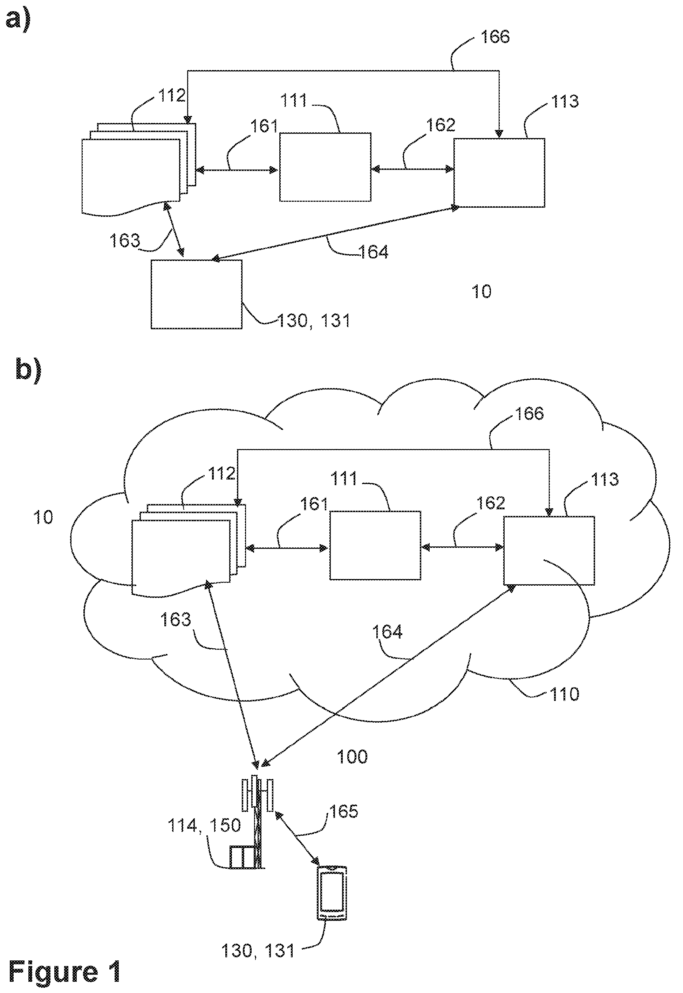

**Figure** 1 depicts two non-limiting examples, in panels "a" and "b", respectively, of a **communications network** 10, in which embodiments herein may be implemented. In some example implementations, such as that depicted in the non-limiting example of Figure 1a), the communications network 10 may be a computer network. In other example implementations, such as that depicted in the non-limiting example of Figure 1b), the communications network 10 may be implemented in a telecommunications network 100, sometimes also referred to as a cellular radio system, cellular network or wireless communications system. In some examples, the telecommunications network 100 may comprise network nodes which may serve receiving nodes, such as wireless devices, with serving beams.

In some examples, the telecommunications network 100 may for example be a network such as 5G system, or Next Gen network or an Internet service provider (ISP)-oriented network. The wireless communications network 10 may support MTC, eMTC, IoT and/or NB-IoT. The telecommunications network 100 may also support other technologies, such as a Long-Term Evolution (LTE) network, e.g. LTE Frequency Division Duplex (FDD), LTE Time Division Duplex (TDD), LTE Half-Duplex Frequency Division Duplex (HD-FDD), LTE operating in an unlicensed band, Wideband Code Division Multiple Access (WCDMA), Universal Terrestrial Radio Access (UTRA) TDD, GSM/Enhanced Data Rate for GSM Evolution (EDGE) Radio Access Network (GERAN) network, Ultra-Mobile Broadband (UMB), EDGE network, network comprising of any combination of Radio Access Technologies (RATs) such as e.g. Multi-Standard Radio (MSR) base stations, multi-RAT base stations etc., any 3rd Generation Partnership Project (3GPP) cellular network, Wireless Local Area Network/s (WLAN) or WiFi network/s, Worldwide Interoperability for Microwave Access (WiMax), IEEE 802.15.4-based low-power short-range networks such as IPv6 over Low-Power Wireless Personal Area Networks (6LowPAN), Zigbee, Z-Wave , Bluetooth Low Energy (BLE), or any cellular network or system.

The communications network 10 comprises a plurality of nodes, whereof a **first node 111, one or more second nodes 112** and a **third node 113** are depicted in Figure 1. The first node 111, the one or more second nodes 112 and the third node 113 may be understood, respectively, as a first computer system or server, one or more second computer systems or servers, and a third computer system or server. Any of the first node 111, the one or more second nodes 112 and the third node 113 may be implemented as a standalone server in e.g., a host computer in the **cloud 110,** as depicted in the non-limiting example of Figure 1b) for the first node 111, the one or more second nodes 112 and the third node 113. In other examples, any of the first node 111, the one or more second nodes 112 and the third node 113 may be a distributed node or distributed server, such as a virtual node in the cloud 110, and may perform some of its respective functions being locally, e.g., by a client manager, and some of its functions in the cloud 110, by e.g., a server manager. In other examples, any of the first node 111, the one or more second nodes 112 and the third node 113 may perform its functions entirely on the cloud 110, or partially, in collaboration or collocated with a radio network node. Yet in other examples, any of the first node 111, the one or more second nodes 112 and the third node 113 may also be implemented as processing resource in a server farm. Any of the first node 111, the one or more second nodes 112 and the third node 113 may be under the ownership or control of a service provider or may be operated by the service provider or on behalf of the service provider.

Any of the first node 111, the one or more second nodes 112 and the third node 113 may be a core network node.

The first node 111 may be understood to have a capability to perform machine-implemented learning procedures, which may be also referred to as "machine learning". The first node 111 may, for example, support running python/Java with Tensorflow or Pytorch, theano etc... The first node 111 may also have GPU capabilities. In some embodiments, the first node 111 may be a NWDAF. In other embodiments, the first node 111 may be a MDAF.

Any of the one or more second nodes 112 and the third node 113 may be another core network node in the communications network 10, as depicted in the non-limiting example of Figure 1a. The one or more second nodes 112 may be understood to have a capability to gather real-time data of resource usage in the communications network 10. In some embodiments, the one or more second nodes 112 may comprise at least one of: an SMF, a UPF, an AF and a PCF.

The third node 113 may have a capability to communicate with the devices connected to the network 10 and effect a redistribution of resources in the network 10. In some embodiments, the third node 113 may be a Converged Charging Function (CHF).

In some examples of the communications network 10, which are not depicted in Figure 1, any of the first node 111, the one or more second nodes 112 and the third node 113 may be co-located or be a same node.

The communications network 10 may comprise **one or more communication devices 130,** e.g., a group of communication devices 130, of which a **communication device 131** is depicted in the non-limiting example scenario of Figure 1 b). The communications network 10 may also comprise other communication devices. Any of the one or more communication devices 130 may be a UE or a Customer Premises Equipment (CPE) which may be understood to be enabled to communicate data, with another entity, such as a server, a laptop, a Machine-to-Machine (M2M) device, device equipped with a wireless interface, or any other radio network unit capable of communicating over a wired or radio link in a communications system such as the communications network 10. Any of the one or more communication devices 130 may be also e.g., a mobile terminal, wireless device, wireless terminal and/or mobile station, mobile telephone, cellular telephone, or laptop, just to mention some further examples. Any of the one or more communication devices 130 may be, for example, portable, pocket-storable, hand-held, computer-comprised, a sensor, camera, IoT device or a vehicle-mounted mobile device, enabled to communicate voice and/or data, via a RAN, with another entity, such as a server, a laptop, a Personal Digital Assistant (PDA), or a tablet computer, sometimes referred to as a tablet, a Machine-to-Machine (M2M) device, a device equipped with a wireless interface, such as a printer or a file storage device, modem, Laptop Embedded Equipped (LEE), Laptop Mounted Equipment (LME), USB dongles or any other radio network unit capable of communicating over a wired or radio link in the communications network 10. Any of the one or more communication devices 130 may be enabled to communicate wirelessly in the communications network 10. The communication may be performed e.g., via a RAN and possibly one or more core networks, comprised within the communications network 10.

The communications network 10 may comprise a plurality of radio network nodes, whereof a **radio network node 150,** e.g., an access node, or radio network node, such as, for example, the radio network node, depicted in Figure 1b). The telecommunications network 100 may cover a geographical area, which in some embodiments may be divided into cell areas, wherein each cell area may be served by a radio network node, although, one radio network node may serve one or several cells. The radio network node 150 may be e.g., a gNodeB. That is, a transmission point such as a radio base station, for example an eNodeB, or a Home Node B, a Home eNode B or any other network node capable to serve a wireless device, such as the communications device 140 in the communications network 10. The radio network node 150 may be of different classes, such as, e.g., macro eNodeB, home eNodeB or pico base station, based on transmission power and thereby also cell size. In some examples, the radio network node may serve receiving nodes with serving beams. The radio network node 150 may support one or several communication technologies, and its name may depend on the technology and terminology used. The radio network node 150 may be directly connected to one or more core networks in the telecommunications network 100.

The first node 111 may be configured to communicate within the communications network 10 with any of the one or more second nodes 112 over a respective **first link 161,** e.g., a radio link, an infrared link, or a wired link. The first node 111 may be configured to communicate within the communications network 10 with the third node 113 over a **second link 162,** e.g., a radio link, an infrared link, or a wired link. Any of the one or more second nodes 112 may be configured to communicate with any of the radio network nodes, such as the radio network node 150, comprised in the communications network 10, over a respective **third link 163,** e.g., a radio link, an infrared link, or a wired link. The third node 113 may be configured to communicate with any of the radio network nodes, such as the radio network node 150, comprised in the communications network 10, over a respective **fourth link 164,** e.g., a radio link, an infrared link, or a wired link. The radio network node 150 may be configured to communicate with the one or more communication devices 130 over a respective **fifth link 165,** e.g., a radio link, an infrared link, or a wired link. The second node 112 may be configured to communicate within the communications network 10 with the third node 113 over a **sixth link 166,** e.g., a radio link, an infrared link, or a wired link.

Any of the respective first link 161, the second link 162, the respective third link 163, the respective fourth link 164 and the sixth link 166 may be a direct link or may be comprised of a plurality of individual links, wherein it may go via one or more computer systems or one or more core networks in the communications network 10, which are not depicted in Figure 1, or it may go via an optional intermediate network. The intermediate network may be one of, or a combination of more than one of, a public, private or hosted network; the intermediate network, if any, may be a backbone network or the Internet; in particular, the intermediate network may comprise two or more sub-networks, which is not shown in Figure 1.

In general, the usage of "first", "second", "third", "fourth", "fifth", "sixth", etc. herein may be understood to be an arbitrary way to denote different elements or entities, and may be understood to not confer a cumulative or chronological character to the nouns they modify.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

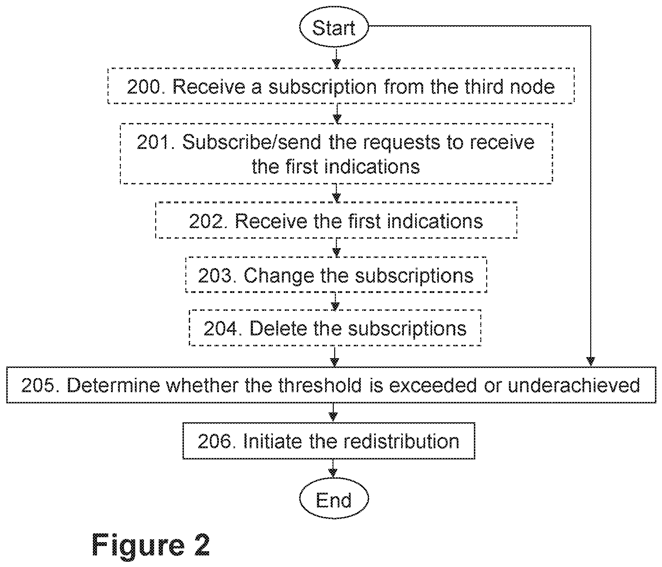

Embodiments of a method, performed by the first node 111, will now be described with reference to the flowchart depicted in **Figure 2.** The method is for handling Quality of Service (QoS) in a communications network 10. The first node 111 operates in the communications network 10.

Several embodiments are comprised herein. In some embodiments all the actions may be performed. In some embodiments, some actions may be optional. In Figure 2, optional actions are indicated with dashed lines. It should be noted that the examples herein are not mutually exclusive. Components from one embodiment may be tacitly assumed to be present in another embodiment and it will be obvious to a person skilled in the art how those components may be used in the other exemplary embodiments. One or more embodiments may be combined, where applicable. All possible combinations are not described to simplify the description.

**Action 200**

During the course of operations in the communications network 10, information regarding communications provided to the one or more communication devices 130 operating in the communications network 10 may be gathered by the one or more second nodes 112. For example, the one or more second nodes 112 may be core network nodes, gathering data from other components of the communications network 10. The information gathered may indicate one or more respective quality of service parameters for the communications provided to the one or more communication devices 130.

The first node 111 may have the capability to obtain this information as one or more first indications, as will be described later, and analyze this information to determine whether the quality of service of the communications provided may be as it may need to be, or whether undesirable changes may predicted to happen in the near future, as it will also be described later. The third node 113 may have the capability to obtain a result of this analysis and determine whether a redistribution of a bandwidth available in the communications network 10 may be necessary in order to avoid undesirable changes in the quality of service, e.g., a drop in the quality of service.

In order to ultimately perform an analytics-based redistribution of a bandwidth available in the communications network 10 according to embodiments herein, the first node 111 may receive a subscription from the third node 113 to register to obtain real time data, e.g., data having QoS parameters negotiated during a PDP context establishment, via the first node 111. The real time data may, for example, comprise observed uplink and down link data speeds and other QoS parameters. The third node 113 may also specify input parameters to be provided to receive the data.

According to the foregoing, in this Action 200, the first node 111 may, in some embodiments, receive a subscription from the third node 113 to receive an indication, referred to herein as a second indication, in real time.

For embodiments wherein the first node 111 may be an NWDAF, the first node 111 may receive the subscription as an Nnwdaf_AnalysticsSubscription_Subscribe.

By receiving the subscription in this Action 200, the first node 111 may enable the third node 113 to receive the second indication in real time, indicating an analysis of the quality of service parameters of the communications provided to the one or more communication devices 130, as it will be described in Action 206. The third node 113 may then in turn be enabled to use the second indication to perform an analytics function and determine whether a bandwidth redistribution may need to be performed.

**Action 201**

In this Action 201, the first node 111 may, in some embodiments 201a, subscribe with the one or more second nodes 112 to receive one or more first indications in real time. The one or more first indications may indicate a real time QoS at a Packet Data Protocol (PDP) level.

Alternatively, or additionally, the first node 111 may, in some embodiments 201b, send one or more requests to the to one or more second nodes 112 to receive the one or more first indications in real time.

The sending in Action 201b may be implemented, e.g., via the respective second link 162.

The first node 111 may subscribe or request to receive the one or more first indications when triggered by receiving a subscription from the third node 113, as described in Action 200.

The one or more first indications may indicate a real time QoS at a Packet Data Protocol (PDP) level.

The one or more first indications may indicate, in real time, one or more respective quality of service parameters for the respective communications provided to the more subscribers. In real time may be understood to mean while a PDP session may be ongoing.

In some embodiments, the one or more first indications may comprise at least one of: a) data consumption per geographical area, per communication device 131, per group of communication devices 130, and/or per radio coverage area, b) type of data used, c) uplink and/or downlink data usage per communication device 131, d) quality of service provisioned for data sessions per communication device 131, and/or per group of communication devices 130, and e) application usage data per communication device 131 and/or per group of communication devices 130.

In some particular embodiments, the one or more first indications may comprise at least one of the following options. According to a first option, the one or more first indications may comprise the data consumption per geographical area, per communication device 131 and/or per group of communication devices 130 and/or per radio coverage area received from an SMF.

According to a second option, the one or more first indications may comprise the type of data used from an SMF.

For analytics of bandwidth redistribution, important parameters may be QoS and uplink and downlink data rates. According to a fourth option, the one or more first indications may comprise uplink and/or downlink data usage per communication device 131, and/or per group of communication devices 130 from an SMF. For example, the one or more first indication may indicate realized uplink and downlink data rates actual values from the SMF. The SMF may in turn collect this data from a UPF while data browsing may be ongoing.

According to a fourth option, the one or more first indications may comprise the quality of service provisioned for data sessions per communication device 131 and/or per group of communication devices 130 received from a Policy Control Function (PCF). For example, the one or more first indication may indicate dynamic PCC rules and allocated QoS data for the users.

According to a fifth option, the one or more first indications may comprise the application usage data per communication device 131 and/or per group of communication devices 130 received from an AF.

In some examples, the one or more first indication may indicate a location information of the one or more communication devices 130 such as the communication device 131, e.g., a UE, considering Public Land Mobile Network (PLMN) details and Central Processing Unit (CPU) Load information.

In some embodiments, the first node 111 may be an NWDAF. In other embodiments, the first node 111 may be an MDAF. In these embodiments, the MDAF may obtain communication device 131 specific data from the NWDAF. The MDAF has been introduced recently by 3GPP SA5. Using MDAF, management service orchestration may be performed in order to manage data analytics. When the first node 111 is a MDAF, the MDAF may registered to the NWDAF to receive communication device 131 specific events for real time data of subscribers.

*The first node 111 as NWDAF*

In some embodiments, the first node 111 may be an NWDAF, and the one or more second nodes 112 may comprise at least one of: an SMF, a UPF, an AF, and a PCF. The first node 111 may collect communication device 131 specific events from the SMF, the PCF and the AF.

In existing 5G architecture, the NWDAF may provide analytics-based data collection from 5G core network functions by registering for notifications with specific data points.

According to some examples of embodiments herein, the first node 111 may register for events from the one or more second nodes 112 for data consumption by communication devices, such as the communication device 131, e.g., a UE, in real time with downlink and uplink data rates.

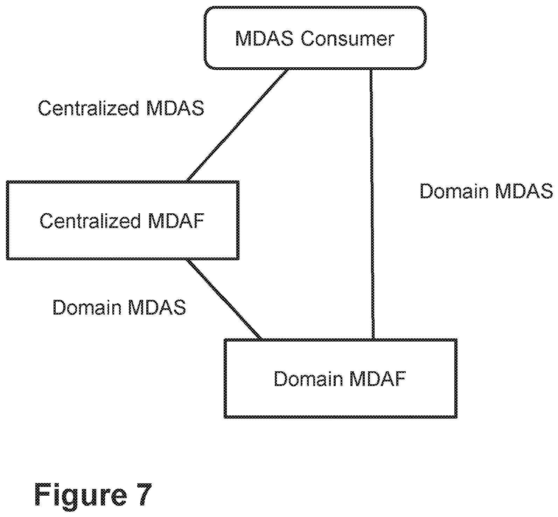

According to examples of embodiments herein, a new interface may be defined between SMF and NWDAF to subscribe and notify real time data usage, such as observed uplink and downlink data rates, and negotiated QoS during PDU context establishment, e.g., for a tracking area. Figure 7, described later, explains this scenario.

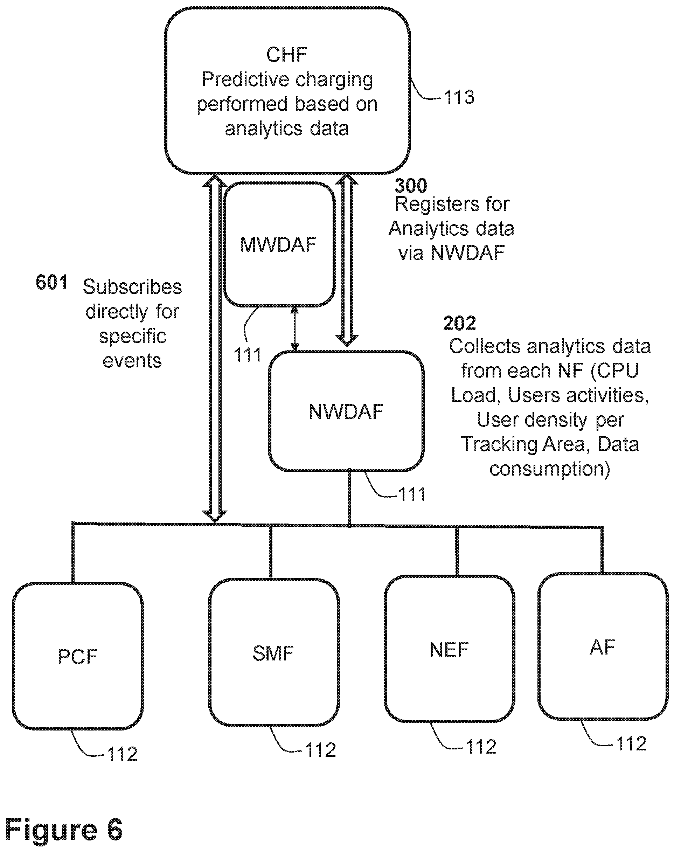

According to examples of embodiments herein, a new interface may be defined between PCF and NWDAF to subscribe and notify real time Policy and Charging Control (PCC) rules configured for the subscribers, allowed QoS for the one or more communication devices 130 such as the communication device 131, e.g., a UE, operating in the communications network 10, through which degradation of QoS observed may be notified to the NWDAF. Figure 6, described later, explains this scenario.

In some examples of embodiments herein, the first node 111 may subscribe for events from SMF for data consumption, and/or events from PCF for QoS policies allocated for user equipments such as the communication device 131, while a PDP session may be ongoing. These use cases explained in Figure 6.

In a specific example, when the first node 111 may receive a registration from the third node 113, e.g., a CHF, for analytics data, the first node 122 may contact the producers, that is, the one or more second nodes 112, to collect the analytics information such as: behavioral data related to communication devices 130, CPU load information of AMF, SMF, UPF and PCF, subscribers density per tracking area or requested tracking area density, per period-based subscriber density, total data consumption per region uplink (UL) and/or downlink (DL), 5G Quality Information (QI) information for QoS.

Data consumption may be segregated as upload/download/streaming while collecting analytical data.

In some examples, the first node 111 may take the initiative of identifying subscribers to whom to perform real time analytics-based bandwidth redistribution, or it may feed tracking area details where a set of Mobile Subscriber Identities (IMSIs), or a set of Mobile Station International Subscriber Directory Numbers (MSISDNs) may be located.

In other examples, the first node 111, while the third node 113 may subscribe for events, may obtain from the third node 113 a set of Subscription Permanent Identifiers (SUPIs) or Generic Public Subscription Identifiers (GPSIs), or specific users analytics information that the third node 113 may need. A SUPI may be either an International Mobile Subscriber Identity (IMSI) or a Network Access Identifier (NAI). A GPSI may be a served GPSI which may contain a Mobile Station International Subscriber Directory Number (MSISDN) of the respective communication device 131. The first node 111 may use the SUPI to determine which of the one or more second nodes 112, e.g., AMF, SMF, PCF and UPF, may be serving the communication device 131. When a SUPI may not be available, a served GPSI may also be used to identify the serving one or more second nodes 112, for PDU sessions of a respective communication device 131. Once the serving one or more second nodes 112 may be identified, the first node 111 may send an events exposure subscriber event to the respective one or more second nodes 112. The one or more second nodes 112, e.g., network functions, may provide analytics data with an events exposure notify message.

The first node 111 as NWDAF may subscribe for a set of event identifiers by invoking the Nnf_EventExposure_Subscribe message.

*The first node 111 as MDAF*

Mobile networks such as the communications network 10 may be understood to have the capability to support a wide variety of services and requirements. This, along with the increasing flexibility of the network may present management and operational challenges and complexities. The management system may therefore benefit from management data analytics services for improving networks performance and efficiency to accommodate and support the diversity of services and requirements. The management data analytics may utilize the network management data collected from the communications network 10, including e.g. service, slicing and/or network functions related data, and make the corresponding analytics based on the collected information. For example, the information provided by Performance Management (PM) data analytics services may be used to optimize network performance, and the information provided by Fault Management (FM) data analytics services may be used to predict and prevent failures of the communications network 10. A management data analytics service (MDAS) may be deployed at different levels, for example, at a domain level, e.g., Radio Access Network (RAN), Core Network (CN), network slice subnet instance (NSSI) and/or in a centralized manner, e.g., at a PLMN level.

The MDAF may be divided into components which may serve as centralized, e.g. in a PLMN level, or domain specific, e.g., RAN, CN, NSSI.

The MDAF may have registered to NWDAF to get communication device specific real time events regarding GBR, and/or dynamic QoS changes taking place for an ongoing PDU session. The first node 111 as MDAF may register for events to RAN or core network functions. The MDAF may register for real events related to an ongoing PDU session for subscribers or a tracking Area. Just as described for the first node 111 as NWDAF, the MDAF may collect real time data from the one or more second nodes 112, e.g., the SMF/UPF and/or PCF network functions.

The interactions between the management service producer and management service consumer may follow a "request-response" paradigm or a "subscribe-notify" paradigm. According to the "request-response" paradigm, a management service producer may be requested by a management service consumer to invoke an operation, which may either perform an action or provides information, or both. The management service producer may provide a response based on the request by the management service consumer. According to the "subscribe-notify" paradigm, a management service consumer may request a management service producer to establish a subscription to receive network events via notifications, under the filter constraint specified in this operation. Subscriptions may be also created by other means than by using such an operation.

*Events subscription towards the SMF:*

In some examples, the first node 111 may subscribe to the SMF to get CPU load information of the node, network slice level usage, data consumption for a specific communication device 131 or group of communication devices 130. This data may help the third node 113 to determine whether any overload condition may exist, or specific communication devices 130 may not have been given the guaranteed bit rates that may have been negotiated during PDU session establishment.

The first node 111, may register for events from the SMF using an HTTP restful method, as per 3GPP TS 29.508, v16.5.0. Specific events may be collected from the SMF for analytics-based redistribution of bandwidth, subscriber downlink data indication, and/or User plane path change.

In the HTTP method post that may be used for subscribing for events from the SMF, the first node 111, e.g., as NWDAF, may register for subscription of the events. To subscribe to event notifications, the first node 111 may send an HTTP POST request with: "{apiRoot}/nsmf-event-exposure/v1/subscriptionsl" as Resource Uniform Resource Identifier (URI) and the NsmfEventExposure data structure as request body that may include an indication of any of the following. First, that the subscription may apply to events related to a single PDU session. The PDU Session IDentifer (ID) of that PDU session may be included as a "pduSeld" attribute. Analytics may require actual data rates for specific communication devices 130 or a tracking area or group ID for a group of communication devices 130. Second, a single communication device 131 may be identified with SUPI or NAI and a group of communication devices 130 with a "groupId" attribute. It may also be possible to use a Data Network Name (DNN) identifier for collection of specific communication device 131 events. Third, the first node 111 may provide an URI to indicate where to receive the requested notifications as a "notifURI" attribute. Fourth, a description of the subscribed events as "eventSubs" attribute that for each event may include an event identifier as "event" attribute; and per event, a User Plane (UP) path change, to indicate whether the subscription may be for early, late, or early and late notifications of UP path reconfiguration in the "dnaiChType" attribute. That may include per event, a "downlink data delivery status", the traffic descriptor of the downlink data source in the "dddTraDes" attribute.

The NsmfEventExposure data structure as request body may also include any of the following options. As a first option, alternate or backup IPv4 Addess(es) indicating where to send Notifications encoded as " altNotiflpv4Addrs" attribute. As a second option, alternate or backup IPv6 Addess(es) indicating where to send Notifications encoded as an "altNotiflpv6Addrs" attribute. As a third option, if the NF service is a CHF, the name of a service produced by the CHF that may expect to receive the notification about subscribed events encoded as a "serviceName" attribute. As a fourth option, an immediate reporting flag as an "ImmeRep" attribute. As a fifth option, an event notification method, such as periodic, one time, on event detection, as "notifMethod" attribute. The event notification method may also comprise one or more of the following attributes: a maximum number of reports that may be wished to be received as "maxReportNbr" attribute; a monitoring duration as an "expiry" attribute; a repetition period for periodic reporting as "repPeriod" attribute; a sampling ratio as "sampRatio" attribute; and/or a group reporting guard time as "grpRepTime" attribute.

Upon the reception of an HTTP POST request with: "{apiRoot}/nsmf-eventexposure/v1/subscriptions/" as resource URI and NsmfEventExposure data structure as request body, the SMF may: create a new subscription, assign a subscription correlation ID, select an expiry time that may be equal or less than a possible expiry time in the request, store the subscription; and/or send a HTTP "201 Created" response with NsmfEventExposure data structure as response body and a Location header field containing the URI of the created individual resource, e.g., {apiRoot/nsmf-eventexposure/v1/subscriptions/{subld}. 3GPP TS 29.508 has yaml syntax on how to register to events and notify with actual events. This yaml may be followed for the implementation.

*Events subscription towards the PCF:*

In other examples, the first node 111 may subscribe to the PCF to get QoS policies chosen for the communication device 131 or group of communication devices 130, e.g., using group Id, PLMN Id, and/or RAT type changes happening. In 5G Non-standalone deployments, it may be possible that user data may be aggregated either through an LTE eNodeB or an 5G NR gNodeB or split bearers. The RAT type changes may cause QoS changes in the communications network 10. By analyzing events received from the PCF, an implementation of redistribution of bandwidth may be enabled.

The event exposure subscription operation service operation may be used by the first node 111 to subscribe for policy events notifications on a specified context for a group of communication devices 130, or any communication device such as the communication device 131, or to modify an existing subscription.

The types of events for which a subscription may be already available may be a PLMN identifier notification and a change of access type. According to embodiments herein, a new type of event for which subscription may become available may be a QoS Policy control specific per communication device 131 and group of communication devices 130. This new type of event may have a new **event Id**. According to embodiments herein, a new type of event for which subscription may become available may be GBR allocated for communication device 131 or group of communication devices 130 or tracking area information reported to the first node 111, e.g., the NWDAF, from the PCF.

Using the Npcf_EventExposure_Subscribe service operation, the following procedures may be supported creating a new subscription and modifying an existing subscription.

To subscribe to event notifications, the first node 111 may send an HTTP POST request with: "{apiRoot}/npcf eventexposure/v1/subscriptionsl" as request URI and the "PcEventExposureSubsc" data structure as request body.

The "PcEventExposureSubsc" data structure may include: an identification of the policy events to subscribe as "eventSubs" attribute. Indication of the one or more communication devices 130 to which the subscription may apply via: identification of a group of communication devices 130 via a "groupId" attribute; or identification of any communication device 131 by omitting the "groupId" attribute; URI of where to receive the requested notifications as "notifUri" attribute; and a notification correlation identifier assigned by the NF service consumer for the requested notifications as "notifid" attribute.

The "PcEventExposureSubsc" data structure may include a description of the event reporting information as an "eventsReplnfo", which may include one or more of the following: a) an event notification method, such as periodic, one time, on event detection, as "notifMethod" attribute; b) a maximum number of reports that may be desired as "maxReportNbr" attribute; c) a monitoring duration as "monDur" attribute; d) repetition period for periodic reporting as "repPeriod" attribute; e) an immediate reporting indication as "immRep" attribute; f) a sampling ratio as "sampRatio" attribute; g) a group reporting guard time as "grpRepTime" attribute; h) a list of Ethernet flows, servlpFlows, and/or i) a network slice for which policy event report may need to be notified.

If the PCF cannot successfully fulfil the received HTTP POST request due to the internal PCF error or due to the error in the HTTP POST request, the PCF may need to send the HTTP error response as per HTTP error response codes.

*Events subscription towards the AF:*

The AF may be understood to play a major role in identifying the services offered for the communication device 131 and may track them with the help of the other one or more second nodes 112, such as the PCF and the NEF network functions. It may also offer analytics data for application functions and currently consumed by NWDAF and NEF network functions. According to examples of embodiments herein, the first node 111 may also be another consumer of application events reported and these events may be helpful in identifying the application service and giving importance for a specific communication device 131 or a group of communication devices 130 involved in the service.

Analytics data exposure may comprise subscription by a consumer such as the first node 111, and the AF may provide events based on occurrence or reports in real time. The NF event services offered by AF may be one or more of the following options. According to a first option, the NF event services offered by AF may allow an NWDAF and/or a NEF to subscribe, modify and unsubscribe for application events. In addition, according to examples of embodiments herein, the AF may offer the third node 113, as new service consumer, to subscribe for a collection of analytics events. According to a second option, the AF may notify the first node 111, e.g., a NWDAF, the NEF, and/or the third node 113, with a with corresponding subscription about observed events on the AF.

AF analytics events services may be e.g., as defined and proposed in 3GPP TS 29.517, v16.1.0. The first node 111, may, according to examples of embodiments herein, be a newly proposed NF consumer to receive periodic data for application services and type of subscriber activities detected.

There may be two possibilities to fetch analytics data from an AF network function. One may be by directly registering to the AF with subscription events. Another approach may be through the NEF. The first node 111, as NWDAF, may contact the AF via the NEF. This may be performed e.g., as specified in 3GPP TS 23.288, v16.4.0. According to embodiments herein, a new, direct interface may be established between a CHF and an AF. The first node 111 may register for subscription events needed and may periodically fetch the data for a specific communication device 131 or group of communication devices 130.

**Table 1** lists the services that may be defined for the AF analytics architecture.

**Table 1**

| Service Operation Name | Description | Initiated by |
|---|---|---|
| Naf_EventExposure_Subscribe | This service operation may be used by an NF service consumer to subscribe to or modify a subscription in the AF for event notifications on a specified application related event for one or more UE(s) or any communication device 131, e.g., UE. | NF Consumer (NWDAF, NEF, CHF) |
| Naf_EventExposure_Unsubscribe | This service operation may be used by an NF service consumer to unsubscribe from event notifications. | NF Consumer (NWDAF, NEF, CHF) |

(continued)

| Service Operation Name | Description | Initiated by |
|---|---|---|
| Naf_EventExposure_Notify | This service operation may be used by the AF to report application related event(s) to the NF service consumer which may have subscribed to the event report service. | AF |

The first node 111 or the network function NEF may subscribe to the AF for service data of an application and/or application communication events. To subscribe to event notifications, the first node 111or the network function NEF may send an HTTP POST request to the AF with: "{apiRoot}/naf-eventexposure/{apiVersion}/subscriptions/" as request URI and the "AfEventExposureSubsc" data structure as request body.

The "AfEventExposureSubsc" data structure may include one or more of the following: a) a description of subscribed event information as an "eventsSubs" attribute by using one or more "EventsSubs" data, b) a description of the event reporting information as an "eventsRepInfo" attribute; c) a URI where to receive the requested notifications as a "notifUri" attribute; and/or d) a notification correlation identifier assigned by the first node 111 for the requested notifications as a "notifId" attribute.

The "EventsSubs" data may include one or more of the following: a) an event to subscribe as an "event" attribute and b) an event filter information as an "EventFilter" attribute associated with the event.

The "eventsRepInfo" attribute may include, as per TS 29.517, v16.1.0 one or more of the following: an event notification method, such as periodic, one time, on event detection, as a "notifMethod" attribute, a maximum number of reports as a "maxReportNbr" attribute, a Monitoring Duration as a "monDur" attribute, a repetition period for periodic reporting as a "repPeriod" attribute, an immediate reporting indication as a "immRep" attribute, a sampling ratio as a "sampRatio" attribute; and/or a group reporting guard time as a "grpRepTime" attribute.

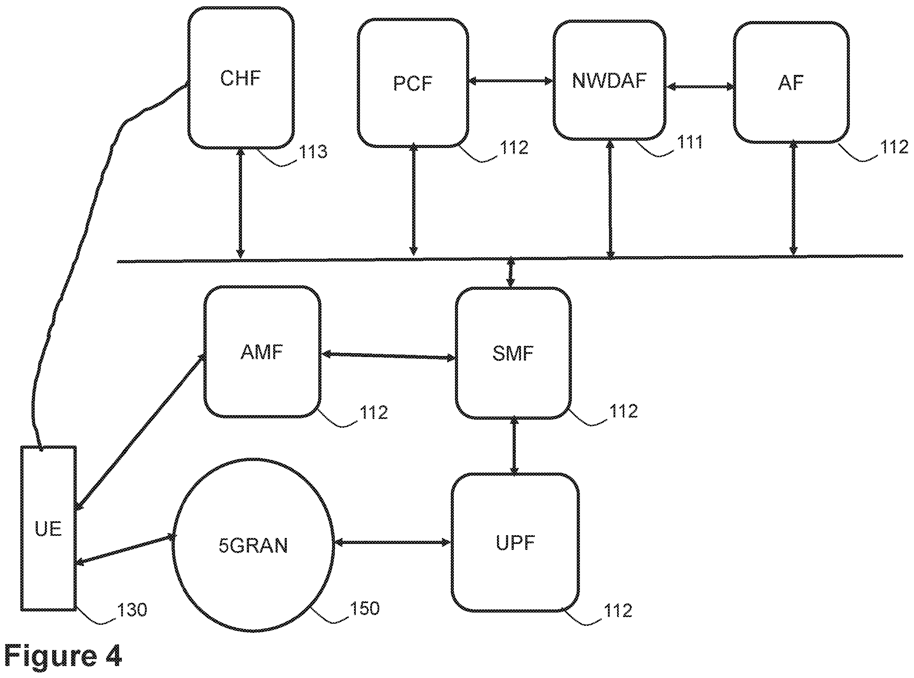

Upon successful reception of the HTTP POST request with "{apiRoot}/naf-eventexposure/{apiVersion}/subscriptions/" as request URI and "AfEventExposureSubsc" data structure as request body, the AF may create a new "Individual Application Event Subscription" resource, store the subscription and send an HTTP "201 Created" response as shown in step 2 of figure 4.2.2.2-1, TS 23.288 v16.4.0. The AF may include in the "201 Created" response one or more of the following: a) a location header field and "AfEventExposureSubsc" data type in the payload body; the location header field may contain the URI of the created individual application session context resource e.g., "{apiRoot}/naf-eventexposure/{apiVersion}/subscriptions/{subscriptionId}"; c) the "AfEventExposureSubsc" data type payload body may contain the representation of the created "Individual Application Event Subscription"; d) when the "monDur" attribute is included in the response, it may represent that the AF selected an expiry time that may be equal or less than the received expiry time in the request; e) when the "immRep" attribute is included and set to "true" in the subscription and the subscribed events are available, the AF may immediately notify the NF service consumer using the Naf_EventExposure_Notify service operation; f) when the sampling ratio as the "sampRatio" attribute is included in the subscription, the AF may select a random subset of communication devices among target communication devices 130 according to the sampling ratio and only report the event(s) related to the selected subset communication devices 130g) when group reporting guard time as the "grpRepTime" attribute is included in the subscription, the AF may accumulate all the event reports for the target communication devices 130 until the group reporting guard time may expire. Then the AF may notify the NF service consumer using the Naf_EventExposure_Notify service operation.

An HTTP delete service operation may be used for analytics to unsubscribe when analytics data may not be needed.

With subscriptions, a subscription id may need to be used in the request URI to unregister the events for which subscription may be made.

By subscribing, or sending a request, to the one or more second nodes 112, in this Action 201, the first node 111 may then be enabled to receive the one or more first indications in real time from the one or more second nodes 112. The first node 111 may then be enabled to use the one or more indications to perform an analytics function and may then provide this information to the third node 113 to enable a bandwidth redistribution.

**Action 202**

In this Action 202, the first node 111 may receive the one or more first indications in real time from the one or more second nodes 112. In real time may be understood to mean while a PDP session, for which the one or more indications may be being received, may be ongoing.

The first node 111 may receive 202 one or more first indications in real time from the one or more second nodes 112 based on one of: a) the one or more subscriptions, and b) the sent one or more requests. In such latter embodiments, the one or more first indications may be received as one or more responses.

In some particular embodiments, the one or more first indications may comprise at least one of the following options. According to a first option, the data consumption per geographical area, per communication device 131 and/or per group of communication devices 130 and/or per radio coverage area received from an SMF. The one or more first indications may for example comprise location information of subscribers considering PLMN details and CPU Load information. According to a second option, the type of data used from an SMF. According to a third option, the uplink and/or downlink data usage, e.g., data rates, per communication device 131 received from the SMF. The SMF may collect this data from the UPF while data browsing may be ongoing. According to a fourth option, the quality of service provisioned for data sessions per communication device 131 and/or per group of communication devices 130 received from a Policy Control Function (PCF). According to the fourth option, the one or more first indications may comprise dynamic PCC rules and allocated QoS data for the subscribers. According to a fifth option, the application usage data per communication device 131 and/or per group of communication devices 130 received from an AF.

In other embodiments, the first node 111 may be an MDAF, the one or more second nodes 112 may comprise at least one of: an SMF, a UPF, an AF, and a PCF, and the first node 111 may receive the one or more first indications via an NWDAF.

The one or more second nodes 112 may provide an events report using a Nnf_EventExposure_Notify service operation.

The NWDAF may obtain events from the one or more second nodes 112 in real time and may either use the data itself for analysis in Action 205 or may provide this data to the MDAF to perform the analysis in Action 205. New message interfaces may be defined between the MWDAF and the NWDAF to receive real time observed uplink and downlink data rates for the set of subscribers.

*SMF reported events*

The present "notification about subscribed events" procedure may be performed by the SMF when any of the subscribed events may occur. The following may apply with respect to the detection of subscribed events:
If the SMF supports the "downlink data delivery status" feature, the event "downlink data delivery status" with delivery status "DISCARDED" or "TRANSMITTED", "BUFFERED" may be subscribed.

There may be cases where the communication device 131 may not be reachable, and this may be detected through the AMF. The SMF may be informed that the communication device 131 corresponding to that subscription may be unreachable, then the SMF may interact with the UPF to remove the buffered packets and may request the UPF to report the traffic information.

The SMF may report events periodically, as specified by a consumer, e.g., the first node 111, or when events may be detected. An HTTP POST service operation may be used to send detected events. These parameters are not currently supported for analytics. SMF may provide QoS parameters and data rates and consumed data UL/DL.

According to embodiments herein, new event subscriptions may be performed to provide UL/DL data rates per communication device 131, aggregate data rates per tracking area or region. The SMF may need to provide communication device 131 specific data rates happening dynamically, as data or voice or sms services may be taking place.

The SMF may observe a PDU Session related event for which the third node 113 may have subscribed to via the first node 111. The SMF may send an HTTP POST request with "{notifUri}" as previously provided by the third node 113 within the corresponding subscription as URI and NsmfEventExposureNotification data structure as request body which may include one or more of the following options. According to a first option, a notification correlation ID provided by the third node 113 during the subscription to the first node 111. This may comprise information about the observed event within the "eventNotifs" attribute that may contain for each observed event an "EventNotification" data structure that may include Event Trigger as "event" attribute for a UP path change notification. According to a second option, a type of notification, such as e.g., "EARLY" or "LATE", as "dnaiChgType" attribute. According to a third option, a source DNAI and/or target DNAI as "sourceDnai" attribute and "targetDnai" attribute if DNAI is changed, respectively. According to a fourth option, if the PDU session type is an Internet Protocol (IP) session, for the source DNAI IP, address/prefix of the communication device 131 as "sourceUeIpv4Addr" attribute or "sourceUeIpv6Prefix" attribute. According to a fifth option, if the PDU Session type is IP, for the target DNAI IP, address/prefix of the communication device 131 as "targetUeIpv4Addr" attribute or "targetUeIpv6Prefix" attribute. According to a sixth option, if the PDU Session type is Ethernet, the Medium Access Control (MAC) address of the communication device 131 in the "ueMac" attribute. If the AFRelocationAck feature is supported and the SMF determines to wait for the AF acknowledgement before activating the new UP path associated with the target DNAI, an URI for the AF acknowledgement in the "ackUri" attribute. According to a seventh option, a CPU load information of the SMF, or even slice level load usage in terms of percentage.

Newly events from the SMF to the first node 111 may be defined according to embodiments herein for one or more of the following: a) per specific communication device 131, UL/DL data rates for each PDU session created, b) aggregated consumption UL/DL data in a specific tracking area; the third node 113 may have provided tracking area details in the subscription event, d) data types for these parameters are as per converged charging specification.

In a given time, UL/DL data rates may help in identifying any issues with regard to a data session voice call and for the third node 113, as will be explained later, informing a communication device 131, about an impending issue or providing higher data rates through a USSD message from the third node 113.

*PCF reported events*

According to embodiments herein, the third node 113, e.g., the CHF, may be another consumer seeking event exposure data from the PCF, via the first node 111, for monitoring dynamic QoS allocated to a specific communication device 131 or for set of the one or more communication devices 130.

**Table 2** and **Table 3** show, respectively, the events that may be supported by the PCF, which may be consumed by the third node 113, as CHF, via the first node 111.

**Table 2**

| Service Operation Name | Description | Initiated by |
|---|---|---|
|  | This service operation may be used by an NF service consumer to subscribe for event notifications on a specified policy control event for a group of UE(s) or any UE, or to modify a subscription. | NF service consumer (NEF, **CHF via the NWDAF)** |
| Npcf_EventExposure_Unsubscribe | This service operation may be used by an NF service consumer to unsubscribe from event notifications. | NF service consumer (NEF, **CHF via the NWDAF)** |
| Npcf_EventExposure_Notify | This service operation may be used by the PCF to report UE related policy control event(s) to the NF service consumer which may have subscribed to the event report service. | PCF |

**Table 3**

| Analytics Information | Request Description | Response Description |
|---|---|---|
| Slice Load level information | Analytics ID: load level information | Requested Analytics data, including load level information of Network Slice instance(s). |
| Observed Service experience information | Analytics ID: Service Experience | Observed Service experience may be provided, individually per UE or clustered per UE subsets in the case of group of UEs, or globally, averaged per Application or averaged across a set of Applications on a Network Slice. |
| NF Load information | Analytics ID: NF load information | Load statistics or predictions information for specific NF(s). |
| Network Performance information | Analytics ID: Network Performance | Statistics or predictions on the load in an Area of Interest; in addition, statistics or predictions on the number of UEs that are located in that Area of Interest. |
| UE mobility information | Analytics ID: UE Mobility | Statistics or predictions on UE mobility. |
| UE Communication information | Analytics ID: UE Communication | Statistics or predictions on UE communication. |
| Expected UE behavioural parameters | Analytics ID: UE Mobility and/or UE Communication | Analytics on UE Mobility and/or UE Communication. |

(continued)

| Analytics Information | Request Description | Response Description |
|---|---|---|
| UE Abnormal behaviour information | Analytics ID: Abnormal behaviour | The exception with an appropriate exception ID. |
| User Data Congestion information | Analytics ID: User Data Congestion | Statistics or predictions on the user data congestion for transfer over the user plane, for transfer over the control plane, or for both. |
| QoS Sustainability | Analytics ID: QoS Sustainability | For statistics, the information on the location and the time for the QoS change and the threshold(s) that were crossed; or, for predictions, the information on the location and the time when a potential QoS change may occur and what threshold(s) may be crossed. |

The event exposure notification from PCF to CHF service operation via the first node 111 may be used by the PCF to periodically report the events detected for a specific communication device 131 or group of the one or more communication devices 130. Policy rules and conditions may influence rating conditions. When more load may be observed, these events may be disabled. For serving important communication devices 130 with high quality QoS and guaranteed bit rate (GBR), periodically analyzing PCC data may help to improve the service of the end users.

The Npcf_EventExposure_Notify service operation may enable the PCF to notify the first node 111 that the previously subscribed policy control event may have occurred. The following procedure using the Npcf_EventExposure_Notify service operation may be supported: notification about subscribed events.

An HTTP POST service operation may be used to notify the events occurred in the PCF.

The PCF may observe a policy control related event for which the third node 113 may have subscribed to via the first node 111. The PCF may then send an HTTP POST request with "{notifUri}" as request URI with the value previously provided by the third node 113 via the first node 111 and the HTTP body may have a "PcEventExposureNotif" data structure. The "PcEventExposureNotif" data structure may include one or more of the following options. According to a first option, a notification correlation ID provided by the NF service consumer during the subscription as "notifId" attribute. This may comprise information about the observed events within the "eventNotifs" attribute. According to a second option, a policy control event as "event" attribute. According to a third option, a new access type as "accType" attribute. The new RAT type may be provided as a "ratType" attribute, if applicable for the notified access type. Evolved Packet Core (EPC) interworking scenarios and an Evolved Packet Data Gateway (ePDG) address may be provided as a gateway address attribute. PLMN changes may also be provided. According to a fourth option, a PLMN change with new PLMN Id. According to a fifth option, an identity of the one or more communication devices 130 affected, and time at which the event occurred. According to a sixth option, network slice level changes: such as Single - Network Slice Selection Assistance Information (S-NSSAI) of a PDU session. According to a seventh option, ethernet flows impacted. According to an eighth option, a list of IP flows in the "servIpFlows", attribute which may contain an impacted IP flow number within the "flowNumber" attribute in each IpFlowInfo data structure. According to a ninth option, PCC rule changes observed per communication device 131 and group of communication devices 130.

*AF reported events*

AF offered analytics services may comprise service data of application, application communication and/or exceptions information.

The AF may report one or more of the above specified services for a specific communication device 131, or for a set of communication devices 130. When the registered event may occur, the AF may report the requested information to the NF service consumer, which may be the first node 111, e.g., a NWDAF, the NEF and/or newly to the third node 113, as e.g., CHF, based on the event reporting information definition requested by the NF service consumer.

The Naf_EventExposure_Notify service operation may enable the AF to notify to the NF service consumer, that is, the first node 111 as NWDAF and/or MDAF, and/or a NEF that the previously subscribed application related event occurred.

The following procedure using the Naf_EventExposure_Notify service operation may be supported: Notification about subscribed events. The AF may observe application related events for which the first node 111 may have subscribed to. The AF may send an HTTP POST request with the "{notifUri}" as request URI with the value previously provided by the third node 113, via the first node 111, within the corresponding subscription, and the "AfEventExposureNotif" data structure. The "AfEventExposureNotif" data structure may include one or more of the following: a) a notification correlation ID provided by the third node 113 via the first node 111 during the subscription as "notifid" attribute, b) information about the observed events within the "eventNotifs" attribute and it may contain for each observed event an "AfEventNotification" data structure that may include: b.1) the application related event as an "event" attribute and the time at which the event was observed encoded as "timeStamp" attribute, and b.2) an event attribute may be "SVC_EXPERIENCE" or "UE_MOBILITY" or "UE_COMM" or "EXCEPTIONS"; c) if the first node 111 cannot successfully fulfil the received HTTP POST request due to the internal error or an error in the HTTP POST request, the first node 111 may send HTTP error response. Upon successful reception of the HTTP POST request with "{notifUri}" as request URI and an "AfEventExposureNotif" data structure as request body, the NF service consumer may send a "204 No Content" HTTP response.

Analytics events received from the AF may provide more information about different applications used in the network, or services offered by 5G core network. AF supported applications may help to determine the different activities of the one or more communication devices 130 and providing guaranteed bit rates as subscribed when the QoS may go down.

By receiving the one or more first indications in real time from the one or more second nodes 112 in this Action 202, high quality mobile scenarios may be monitored, as the one or more second nodes 112 may provide events related to changes dynamically happening for the one or more communication devices 130, such as PLMN changes or RAT changes. The first node 111 may then be enabled to use the one or more first indications to perform an analytics function and may then provide this information to the third node 113 to determine whether or not to perform a bandwidth redistribution.

**Action 203**

In this Action 203, the first node 111 may change at least one of the one or more subscriptions. Modifying an existing session may be possible when a network function may have changed or an URI may have changed.

In such embodiments, the received one or more first indications may be further based on the changed at least one of the one or more subscriptions.

By changing at least one of the one or more subscriptions in this Action 203, the first node 111 may then be enabled to, e.g., when host name or IP address changes, send a subscription to a correct second node of the one or more second nodes 112.

**Action 204**

In this Action 204, the first node 111 may delete at least one of the one or more subscriptions.

In some embodiments, the received one or more first indications may be further based on the changed, or deleted, at least one of the one or more subscriptions.

By deleting at least one of the one or more subscriptions in this Action 204, the first node 111 may then be enabled to dynamically stop receiving notifications of the subscribed event, in real time, whenever, such notifications may no longer be necessary, e.g., one hour after a football match may be over, and the load of the communications network 10 in a particular area may return to normal levels.

**Action 205**

In this Action 205, the first node 111 determines, in real time, whether or not a respective quality of service threshold is predicted to be exceeded or underachieved in respective communications provided to one or more communication devices 130 operating in the communications network 10. The determining in this Action 205 may be based on the one or more first indications received, in real time, from the one or more second nodes 112 operating in the communications network 10. The one or more first indications may indicate, in real time, one or more respective quality of service parameters for the respective communications provided to the one or more communication devices 130.

Determining in this Action 205 may be understood as calculating or deriving, e.g., by ML processing of the one or more first indications received in Action 202. For example, regression suites inside the first node 111 may determine if any QoS degradation may be occurring by generating a regression data model.

To be predicted may be understood to be in a future time period, e.g., near future time period. That is, the first node 111 may determine if a drop or increase of the QoS is about to happen, e.g., is imminent.

The analytics data collected from the one or more second nodes 112, e.g., SMF and PCF, in the one or more first indications may be understood to help to identify what kind of users may be connected to the communications network 10, and in which area more users may be present and which may show higher data consumption. The first node 111 may collect analytics data from the one or more second nodes 112 in real time in Action 202, and may then, in this Action 205, compute the data usage per tracking area, user's density and data usage per communication device 131. Using analytics of the data, the first node 111 may then inform the third node 113 about the observed QoS data, as will be described in Action 206.

For example, according to this Action 205, the CPU load of the one or more second nodes 112, e.g., the SMF, the UPF and the PCF may be analyzed.

Based on continuous load, QoS and congestion data received from the one or more second nodes 112 to the NWDAF, a model may be created to determine if a situation may fit for a redistribution of bandwidth QoS to maintain high service quality to the customers. The model may enable to predict when a degradation or an excess of QoS, that is, an underutilization of resources in the communications network 10 may be about to happen, and therefore prevent that an undesirable level of QoS may be reached in the communications network 10. In addition to QoS, congestion and load information, other custom factors may also be included for analysis, for example, day of week, time of day, location, event schedule etc.

In some examples, the first node 111, in this Action 205, may perform subscriber density analysis in different tracking areas and predictive analysis of density in order to identify any major events, e.g., a football match, that may be taking place.

Once a model of QoS based on input data such as those provided by the one or more first indications may be created based on past data, the threshold may be set by the operator and based on the probability calculated by performing logistic regression on the data and threshold, it may be decided if given a Tracking Area (TA), in a given time, may be a candidate for a redistribution of bandwidth QoS and the information may be sent to the third node 113 for further processing to shift a given user to an alternate temporary QoS plan, to offer a redistribution of bandwidth, and therefore the possibility to maintain high quality services. At a given time, in a given TA, based on the prediction model, a dynamic QoS adjustment may be applied.

**Table 4** shows the kind of data that may be used as input for the first node 111 to perform the determining in this Action 205, for embodiments wherein when the first node 111 may be an NWDAF.

**Table 4**

| Information | Source | Description |
|---|---|---|
| Area Subset | NWDAF | TA or Cell ID of area of interest |
| List of performance information | NWDAF | Observed statistics during analytics target period |
| Network Status Indication | NWDAF | Congestion Level |
| QOS Key Performance Indicator (KPI) | NWDAF | QoS of given TA crossing threshold |
| Custom matrix | custom | Customer parament to be added to the model |

**Table 5** shows the kind of data that may be output by the first node 111 to perform the determining in this Action 205.

**Table 5**

| Information | Description |
|---|---|
| Area Subset | TA or Cell ID of area of interest |
| QOS | Observed statistics during analytics target period<br>• Observed Uplink Max bitrates from SMF<br>• Observed Downlink Max bit rates from SMF<br>• Guaranteed bit rates negotiated by PCF (Both Uplink/Downlink) |
| Probability | Probability that TA is subjected to a redistribution of bandwidth |

A non-limiting example of the model equation may be, e.g.:

$$Y = \beta 0 + \beta 1 X 1 + \beta 2 X 2 + \beta 3 X 3 \ldots \beta n X n$$

The probability may be $p = 1/(1 + \exp(-(\beta 0 + \beta 1 X 1 + \beta 2 X 2 + \beta 3 X 3 \ldots \beta n X n))$ where X1.... Xn may be understood to be dependent variables, β0... βn may be understood to be coefficient of dependent variables in the model.

*Analytics using NWDAF*

As mentioned earlier, in some embodiments, the first node 111 may be an NWDAF. The NWDAF may perform analytics based and new interface messages defined to collect PDP level real time QoS observed by registering for the events to the one or more second nodes 112, e.g., the SMF, the PCF and the UPF network functions.

*Analytics using MDAF*

A Management Data Analytics Service (MDAS) may be understood to provide data analytics of different network related parameters including, for example, load level and/or resource utilization. For example, the MDAS for a network function (NF) may collect the load related performance data of the NF, e.g., resource usage status of the NF. The analysis of the collected data may provide forecast of resource usage information in a predefined future time. This analysis may also recommend appropriate actions e.g., scaling of resources, admission control, load balancing of traffic, etc.

An MDAS for a NSSI may provide NSSI related data analytics. The service may consume the corresponding MDAS of its constituent NFs. The NSSI MDAS may further classify or shape the data in different useful categories and analyze them for different network slice subnet management needs, e.g., scaling, admission control of the constituent NFs etc... If an NSSI is composed of multiple other NSSIs, the NSSI MDAS may act as a consumer of MDAS of the constituent NSSIs for further analysis, e.g., resource usage prediction, failure prediction for an NSSI, etc.

The first node 111 as MDAF may provide the MDAS for one or more NF, NSSI and/or Network slice instance (NSI) and may consume some management services produced by other functional blocks. The MDAF may consume data reported by the one or more second nodes 112, e.g., the SMF, PCF, AF network functions, to analyze and perform data analytics of real time data for the users considering their QoS profile with uplink and downlink actual data rates observed in the communications network 10, and comparing with actual data rates that may need to be provided to users. When there is degradation, the MDAF analytics information may help to offer better services to communication devices 130 who may wish to change the subscription plans based on the real time information provided.

As described for the NWDAF, the MDAF may perform ML processing of the received one or more first indications, and it may then be enabled to notify observed events to the third node 113. The MDAF may have functionalities such as predictive and prescriptive data analytics. Predictive and prescriptive analytics may be performed to ensure all the time that bandwidth may be distributed in the most optimal way so that the performance of the communications network 10 may be optimized and in turn the best service may be provided to the one or more communication devices 130.

The MDAS may be deployed at different levels, for example, at domain level or in a centralized manner. A domain-level MDAS may provide domain specific analytics, e.g. resource usage prediction in a CN or failure prediction in a NSSI, etc. A centralized MDAS may provide end-to-end or cross-domain analytics service, e.g., resource usage or failure prediction in an NSI, optimal CN node placement for ensuring lowest latency in the connected RAN, etc. A domain MDAF may be understood to produce domain MDAS. A domain MDAS may be consumed by the centralized MDAF and the other authorized MDAS consumers, for example, an infrastructure manager, a network manager, a slice manager, a slice subnet manager, other 3rd party OSS, etc. A centralized MDAF may be understood to produce a centralized MDAS. A centralized MDAS may be consumed by different authorized MDAS consumers.

By determining, in real time, whether or not the respective quality of service threshold is predicted to be exceeded or underachieved in the respective communications provided to the one or more communication devices 130, the first node 111 may enable to know whether a dynamic redistribution of bandwidth may need to be performed in real time in the communications network 10, based on analytical data and current usage from, e.g., a given tracking area.

**Action 206**

In this Action 206, the first node 111 may initiate a redistribution of a bandwidth available in the communications network 10 to at least one of the one or more communication devices 130. According to the claimed invention, the initiation 206 of the redistribution is based on a result of the determination performed in Action 205.

The redistribution of the bandwidth may be in real time.

The first node 111 may in some examples, alternatively or additionally, initiate a change of policy.

According to the claimed invention, initiating the redistribution of the bandwidth in this Action 206 comprises initiating providing a second indication to the third node 113 operating in the communications network 10. The second indication indicates a result of the determination performed in Action 205. The third node 113 is understood to have the capability to manage the redistribution of bandwidth of implement just a redistribution. For example, a regression may be run on the data indicated in the one or more indications, and if the defined threshold is reached, the second indication may be an event that may be triggered to the third node 113, e.g., the CHF, through a restful interface.

The second indication may comprise analytics data. In some embodiments, the second indication may comprise at least one of: a) the data consumption per geographical area, network slice, communication device 131 and/or group of communication devices 130 and/or per radio coverage area, b) the type of data used, c) the uplink and/or downlink data usage per equipment, d) the quality of service provisioned for data sessions per communication device 131 and/or per group of communication devices 130, and e) the application usage data per communication device 131 and/or per group of communication devices 130.

In some embodiments, the providing of the second indication may be based on the received subscription from the third node 113 in Action 200. In some of such embodiments, the second indication may be a Nnwdaf_AnalysticsSubscription_Notify.

The second indication may be comprised of one or more indications.

In some embodiments, the first node 111 may be an NWDAF, the one or more second nodes 112 may comprise at least one of: an SMF, a UPF, an AF, and a PCF, and the third node 113 may be a CHF.

In some examples, the first node 111, as NWDAF, may according to this Action 206, by sending the second indication, notify the third node 113, e.g., a CHF, on observed events. A new interface may be understood to be defined according to embodiments herein, between the NWDAF and the CHF, to communicate the second indication. For example, the NWDAF may analyze the received events from the SMF, PCF and notify the CHF to change the data plane or improve the user experience.

Analytics data reported by the NWDAF to the third node 113, or NF consumer, may be associated to an analytics Id may be understood to identify the information that may be shared from the one or more second nodes 112, e.g., a NF producer, to a consumer. It may be understood that there may be a mapping between an analytics Id to each communication device 131 or group of communication devices 130.

As described earlier, in other embodiments, the first node 111 may be an MDAF, the one or more second nodes 112 may comprise at least one of: an SMF, a UPF, an AF, and a PCF, the third node 113 may be a CHF, and the first node 111 may have received the one or more first indications via a NWDAF.

By initiating the redistribution of the bandwidth available in the communications network 10 to at least one of the one or more communication devices 130, in this Action 206, the first node 111 may ultimately enable that better and guaranteed services may be provided to the one or more communication devices 130. This may be particularly relevant for use cases such as, e.g., massive IoT, Ultra-Reliable Low-Latency Communications (URLLC), cellular vehicle-to-everything (V2X), or other critical services that may be enabled on the SMF and the UPF.

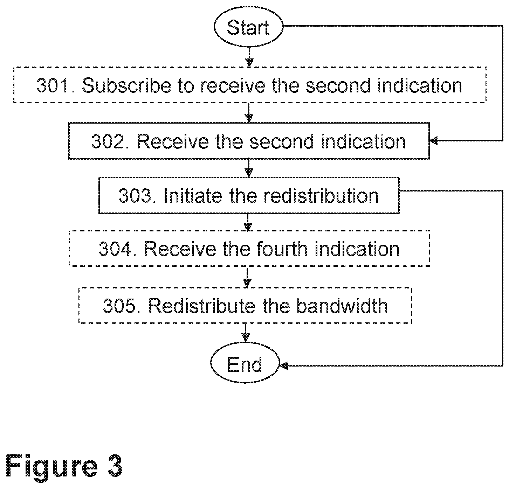

Embodiments of a method, performed by the third node 113, will now be described with reference to the flowchart depicted in **Figure 3.** The method may be understood to be for handling QoS in the communications network 10. The third node 113 operates in the communications network 10.

Several embodiments are comprised herein. In some embodiments all the actions may be performed. In some embodiments, some actions may be optional. In Figure 3, optional actions are indicated with dashed lines. It should be noted that the examples herein are not mutually exclusive. Components from one embodiment may be tacitly assumed to be present in another embodiment and it will be obvious to a person skilled in the art how those components may be used in the other exemplary embodiments. One or more embodiments may be combined, where applicable. All possible combinations are not described to simplify the description. The detailed description of some of the following corresponds to the same references provided above, in relation to the actions described for the first node 111 and will thus not be repeated here to simplify the description. For example, in some embodiments, the first node 111 may be a NWDAF, and the third node 113 may be a CHF. In other embodiments, the first node 111 may be a MDAF, and the third node 113 may be a CHF.

**Action 301**

In this Action 301, the third node 113 may, in some embodiments subscribe with the first node 111 to receive the second indication in real time. As stated earlier, real time may be understood to mean while a PDP session may be ongoing

The third node 113 may register to receive analytics data from the first node 111 for notifications on QoS for various tracking areas for the one or more communication devices 130. The first node 111 may in turn subscribe for QoS information from the PCF, data consumption details from the SMF/UPF and different applications usage from the AF, network load information may be fetched from all these network functions, as described in Action 201.

Alternatively, the third node 113 may directly subscribe to the one or more second nodes 112.

In some other examples, the third node 113 may register for analytics data from the SMF, the PCF and/or the UPF through the first node 111. It may also specify input parameters to be provided to receive the data.

The third node 113 may register a service to the NRF. The first node 111 may then read the entry and send the second indication as, e.g., an analytics-based plan and/or policy change request to the third node 113.

By subscribing, or sending a request, to the first node 111, in this Action 301, the third node 113 may then be enabled to receive the second indication, in real time from the first node 111 in the next Action 302. The third node 113 may then be enabled to use the second indication to know if the QoS provided to the one or more communication devices 130 may have e.g., degraded, and then determine whether a bandwidth redistribution may need to be performed to improve QoS provided, or to maintain the QoS that may have been agreed to be provided.

**Action 302**

In this Action 302, the third node 113, according to the claimed invention, receives in real time, the second indication from the first node 111 operating in the communications network 10. The second indication indicates whether or not a respective QoS threshold may be predicted to be exceeded or underachieved in the respective communications provided to the one or more communication devices 130 operating in the communications network 10. In real time may be understood to mean while a PDP session, for which the one or more indications may be being received, may be ongoing.

In particular examples, the second indication may notify the third node 113 of a QoS degradation predicted to be experienced by the one or more communication devices 130 in a future time period, e.g., a near future.

The receiving of the second indication may be based on the subscription performed in Action 301.

The second indication may further indicate at least one of: a) the data consumption per geographical area, per communication device 131, per group of communication devices 130 and/or per radio coverage area received from the SMF, b) the type of data used from the SMF, c) the uplink and/or downlink data usage per communication device 131 received from the SMF, d) the QoS provisioned for data sessions per communication device 131 and/or per group of communication devices 130 received from the PCF, and e) the application usage data per communication device 131 and/or per group of communication devices 130 received from the AF.

The third node 113 may receive the analytics data in real time or when thresholds may be reached. The periodicity of the receiving may be configurable. The third node 113 may receive the below analytics information as a REST request from the first node 111, e.g., the NWDAF: a) data consumption per tracking area or specific communication device 131 or from group of communication devices 130 which may be located in specific cells where major events may be taking place; b) specific communication device 131 data usage UL/DL from the SMF which may eventually collect the data from the UPF; and c) QoS provisioned for different PDU sessions per communication device 131 from the PCF.

By receiving the second indication in this Action 302, based on analytical data and current usage from, e.g., a given tracking area, the third node 113 may be enabled to know whether or not the respective QoS threshold may be exceeded or underachieved in the respective communications provided to the one or more communication devices 130. This may in turn enable the third node 113 to know whether a dynamic redistribution of bandwidth may need to be performed in real time in the communications network 10 to make sure a certain QoS is maintained.

**Action 303**

In this Action 303, the third node 113 initiates a redistribution of a bandwidth available in the communications network 10 to at least one of the one or more communication devices 130. The initiation of the redistribution is based on the received second indication.

To initiate the redistribution of the bandwidth available may comprise, in some examples, to determine whether more or less bandwidth than that currently provided to the communication device 131 may be available to be offered for use by the communication device 131. To initiate the redistribution of the bandwidth available may further comprise, in some examples, determining one or more conditions according to which the change of bandwidth may be provided.

For example, once the third node 113 may get a notification via the second indication received from the first node 111 about a QoS degradation, as indicated by the QoS going below a configured low threshold, the third node 113 may analyze, according to this Action 303, whether it may offer any more bandwidth, e.g., allocated to a different use, or not yet allocated, to circumvent the QoS degradation.

The third node 113 may in some examples, alternatively or additionally, initiate a change of policy.

For example, the CPU load of the one or more second nodes 112, e.g., the SMF, the UPF and the PCF may have been analyzed by the first node 111 in Action 205. The UPF and the SMF CPU load information may be required to be critical. Non-critical data sessions may be controlled and/or rejected when the CPU load of one or more of the one or more second nodes 112, e.g., the SMF and the UPF, may be high.

The first node 111, in Action 205, may have performed subscriber density analysis in different tracking areas and predictive analysis of density in order to identify any major events that may be taking place, and the third node 113, according to this Action 303 may dynamically change the bandwidth provided to the one or more communication devices 130, based on demand.

When congestion may be observed in the UPF and the SMF, where the CPU load may be high, the quota allocation may be changed dynamically to reduce the consumption and some of the sessions may be rejected. The period during which the one or more first indications may be collected may be configurable at the first node 111. When the UPF and the SMF load may be sufficiently high and the rejections may be sufficiently high, according to a certain configurable threshold, the third node 113 may trigger a change to the allocated bandwidth due to this and the QoS of the sessions may be therefore controlled.

In some non-limiting examples, any implemented redistribution of bandwidth may comprise that policies for targeted users may be changed dynamically on a temporary basis.

As a non-limiting example, the one or more conditions may comprise a GBR of a PDP session. The PCF may be understood to provide information related to QoS allocated to different users and priority. GBR QoS sessions may be given high importance considering the one or more first indications that the PCF may have provided. Conversely, non-GBR sessions may be released when congestion may be considered too high.

For example, usage of IoT devices in real time may cause traffic congestion and selective priority may be needed. In enterprises and private networks which may use Massive IoT, there may be a need to prioritize some communication devices 130 over the others.

In some examples, the initiating in this Action 303 of the redistribution of the bandwidth may comprise determining how to perform a real time enterprise prioritization of Machine to Machine traffic. This may comprise checking an enterprise plan to devise a prioritization event of devices and functions.

In other examples, for the enterprise to reach an ideal network usage, a timebound distribution of data may be determined so that tasks may be completed faster.

The third node 113 may, in this Action 303, analyze the data provided by the first node 111 and determine whether to inform one or more of the one or more communication devices 130 about the QoS changes, e.g., imminent degradation. Accordingly, in some embodiments, the initiating in this Action 303 of the redistribution of the bandwidth may comprise providing a third indication to at least one of the one or more communication devices 130 operating in the communications network 10. The third indication may indicate a possibility to perform a change to increase or decrease the quality of service of at least one of the one or more communication devices 130. For example, if the third node 113 may find a major difference for observed QoS and negotiated QoS, the third node 113 may then notify the one or more communication devices 130.

In some particular non-limiting examples, the third indication may be a USSD message. In further particular examples, the third indication may be a USSD message that may be triggered from the third node 113 when a specific service may be allowed for a specific communication device 131, based on the IMSI and/or served GPSI identified after the analytics data may be analyzed. In some embodiments, the third indication may be sent as a REST request.

For example, in an enterprise where a private network may be used, and massive machine to machine communication may take place, there may be a possibility of degradation of QoS due to unforeseen reasons. In this scenario, to ensure that mission critical operations may still be performed and different devices may have capability to perform different critical functions at different times, e.g., an AF of the enterprise may be given a notification to re-distribute the existing bandwidth in a timebound fashion to ensure mission critical applications may continue to work as required. In a particular example, the third indication may be a request to prioritize important machine IDs based on time, function and importance.

In another example, the third indication may be a timebound offer and proposed revised network usage details.

By initiating of the redistribution of the bandwidth in this Action 303, the third node 113 may be enabled to manage the QoS provided in the communications network 10 and ensure that a certain QoS is maintained, improving the usage of resources in the communications network 10 by improving the efficiency with which they are used.

## Action 304

In this Action 304, the third node 113 may receive 304, in real time, and in response to the sent third indication a fourth indication from at least one of the one or more communication devices 130. The fourth indication may indicate whether the at least one of the one or more communication devices 130 may accept or reject the possibility to perform the change to increase or decrease the quality of service.

Based on feedback from pertinent one or more of the one or more communication devices 130, the third node 113 may then decide to perform a redistribution of bandwidth in Action 305, considering any existing quota of availability and a criticality of the service.

In the particular example of a an enterprise prioritization of M2M traffic, the second indication may be an ordered list of devices from a third party application, e.g., an AF, the order being based on importance of the machines based on function and time.

In another particular example, the fourth indication may be an acceptance of an offered timebound distribution of data.

By receiving the fourth indication in this Action 304, the third node 113 may be enabled to complete, in some examples, the redistribution of the bandwidth that may have been initiated in Action 303.

## Action 305

In this Action 304, the third node 113 may redistribute the bandwidth available in the communications network 10, based on the received fourth indication.

In some embodiments, the redistribution of the bandwidth may be in real time.

The redistributing in this Action 305 of the bandwidth available may comprise a change in a policy of the at least one of the one or more communication devices 130.

In some embodiments, the redistributing in this Action 305 of the bandwidth available may comprise sending one or more fifth indications to the one or more second nodes 112 operating in the communications network 10. The one or more second nodes 112 may comprise at least one of: the SMF, the UPF, the AF, and the PCF. In such embodiments, the one or more fifth indications may indicate how to implement or enforce the change in the policy of the at least one of the one or more communication devices 130 that may have been determined in this Action 303.

For example, the one or more fifth indications may be a Subscribe Notification Request (SNR) triggering a new plan.

By redistributing the bandwidth in this Action 305, the third node 113 may be enabled to enforce the management the QoS provided in the communications network 10 which may have been determined in Action 303, and ensure that a certain QoS is maintained, improving the usage of resources in the communications network 10 by improving the efficiency with which they may be used. Redistributing the bandwidth according to embodiments herein may be particularly relevant for massive IoT, URLLC and cellular vehicle-to-everything (V2X) use cases. Enterprises and private networks which use Massive IOT, may therefore be enabled to selectively prioritize some communication devices 130/UEs over the others. In those scenarios, embodiments herein may be used to prevent that usage of all these IoT devices in real time causes traffic congestion.

The next Figures depict different non-limiting examples of different aspects of embodiments herein.

**Figure** 4 is a non-limiting example of a communications network 10 according to embodiments herein, as a 5G Architecture comprising several network functions. The diagram illustrates the interfaces and notification towards the third node 113 as a CHF to in turn notify the users of the one or more communication devices 130 for a redistribution of bandwidth when QoS may have degraded considering any negotiated QoS both uplink and downlink. In this example, the first node 111 is a NWDAF performing 5G specified analytics for tracking mobile data of users both uplink and downlink. The one or more second nodes 112 comprise a PCF, an AF, an AMF, an SMF, and a UPF.

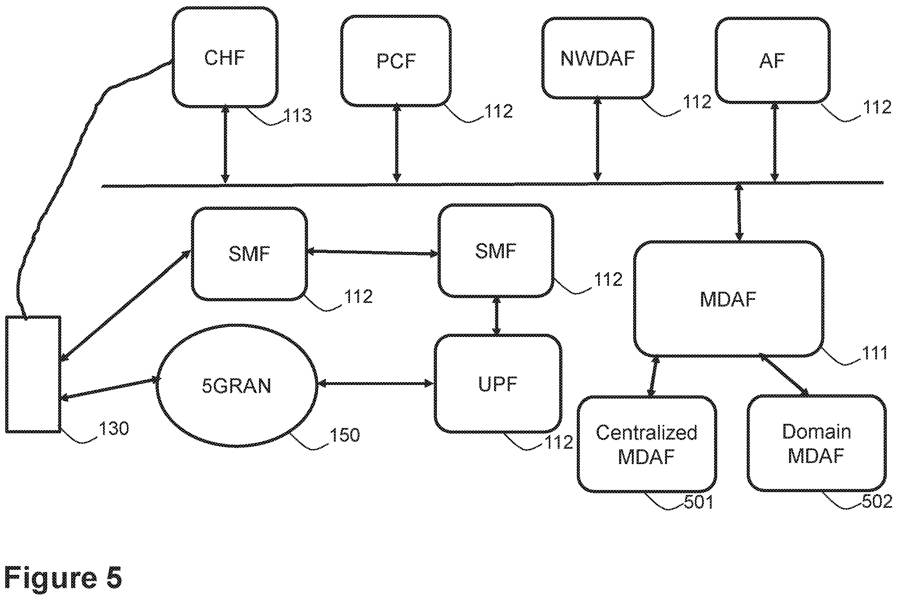

**Figure 5** is another non-limiting example of a communications network 10 according to embodiments herein, as a 5G Architecture comprising several network functions. The diagram illustrates the interfaces and notification towards the third node 113 as a CHF to in turn notify the users of the one or more communication devices 130 for a redistribution of bandwidth when QoS may have degraded considering any negotiated QoS both uplink and downlink. In this example, the first node 111 is an MDAF performing 5G specified analytics for tracking mobile data of users both uplink and downlink, comprising a centralized MDAF 501 and a domain MDAF 502. The one or more second nodes 112 comprise a PCF, an AF, an SMF, and an NWDAF.

**Figure 6** is a schematic diagram illustrating selected actions of embodiments herein. In this example, the first node 111 is an NWDAF, or an MDAF. The third node 113 is a CHF. The one or more second nodes 112 comprise a PCF, an AF, an AMF, an SMF and a NEF. According to Action 301, the third node 113 may register to receive analytics data via NWDAF. In some examples, the third node 113 may subscribe directly for specific events at 601. According to Action 202, the first node 111 collects analytics data from each NF, such as CPU Load, activities of the one or more communication devices 130, User density per tracking Area, and/or data consumption.

**Figure 7** is a schematic diagram illustrating an MDAS consumer interfacing with a centralized MDAF component via a centralized MDAS and with a domain specific MDAF via a domain MDAS. The domain specific MDAF may in turn interface with the centralized MDAF via a domain MDAS.

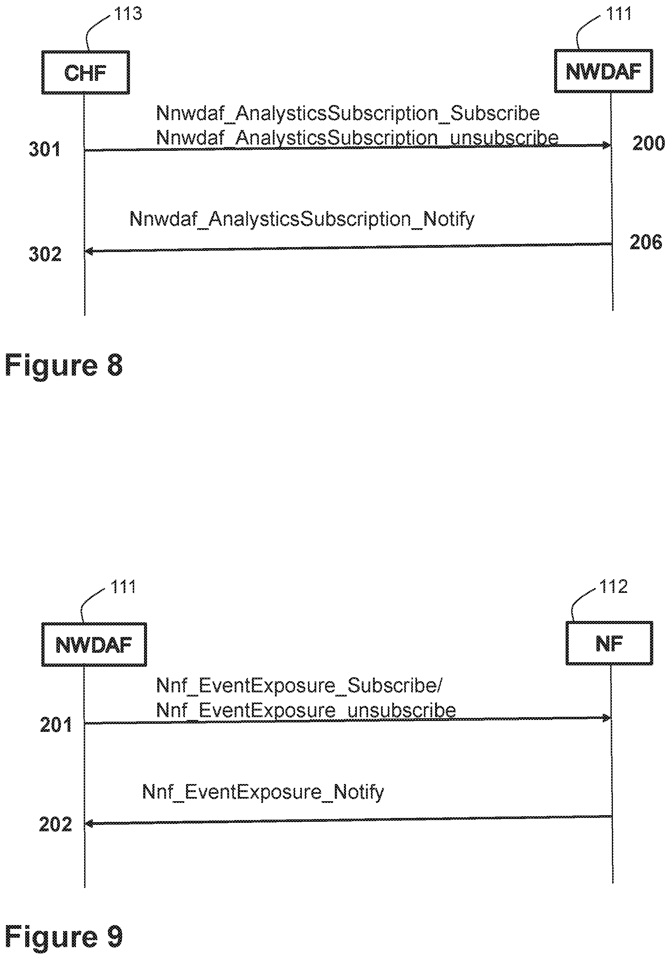

**Figure 8** is a schematic diagram illustrating a non-limiting example of the interface flow and message format for how the third node 113 as CHF may register with the first node 111, as NWDAF, to receive the one or more first indications, according to Action 301, which subscription the first node 111 may receive according to Action 200. The first node 111, in accordance with Action 206, may then send the second indication to the third node 113, which the third node 113 receives according to Action 302.

**Figure 9** is a schematic diagram illustrating a non-limiting example of the interface flow and message format for how the first node 111 as NDAF may register with the one or more second nodes 112, as Network Functions (NFs), to receive the one or more first indications, according to Action 201, which the first node 111 may receive according to Action 202.

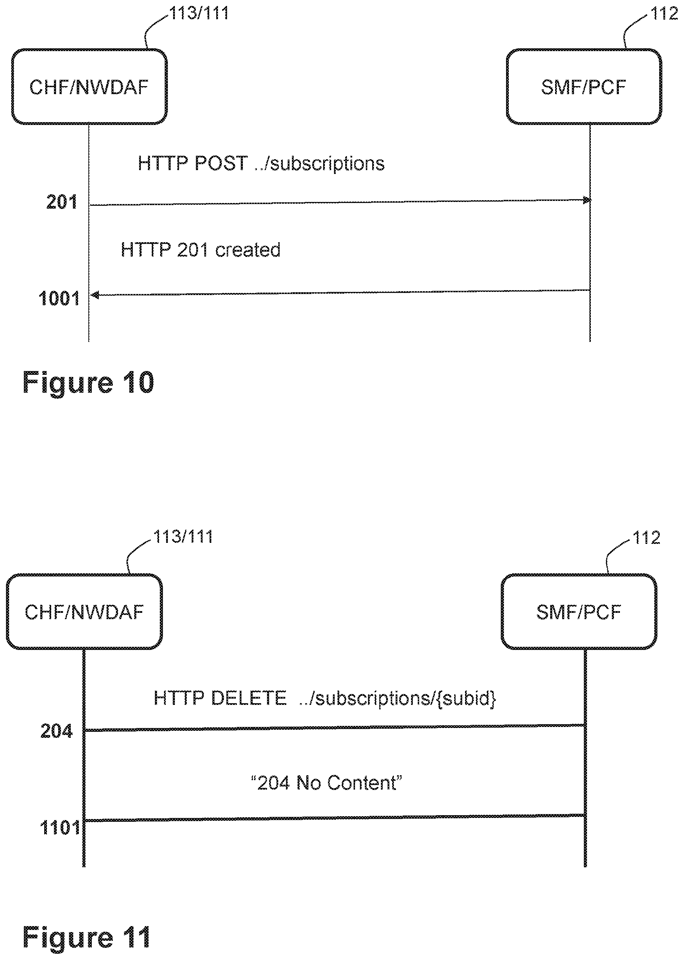

**Figure 10** is a schematic diagram illustrating a non-limiting example of the interface flow and message format for how the third node 113, as CHF, may register for events from the SMF and/or the PCF via the first node 111, as NWDAF, or directly, using an HTTP restful method. The first node 111 may subscribe according to Action 201 and receive an acknowledgement of the subscription at 1001.

**Figure 11** is a schematic diagram illustrating a non-limiting example of the interface flow and message format for how the third node 113, as CHF, may delete a subscription for events from the SMF and/or the PCF via the first node 111, as NWDAF, or directly, using an HTTP restful method. The first node 111 may delete the subscription according to Action 204 and receive an acknowledgement of the subscription at 1101.

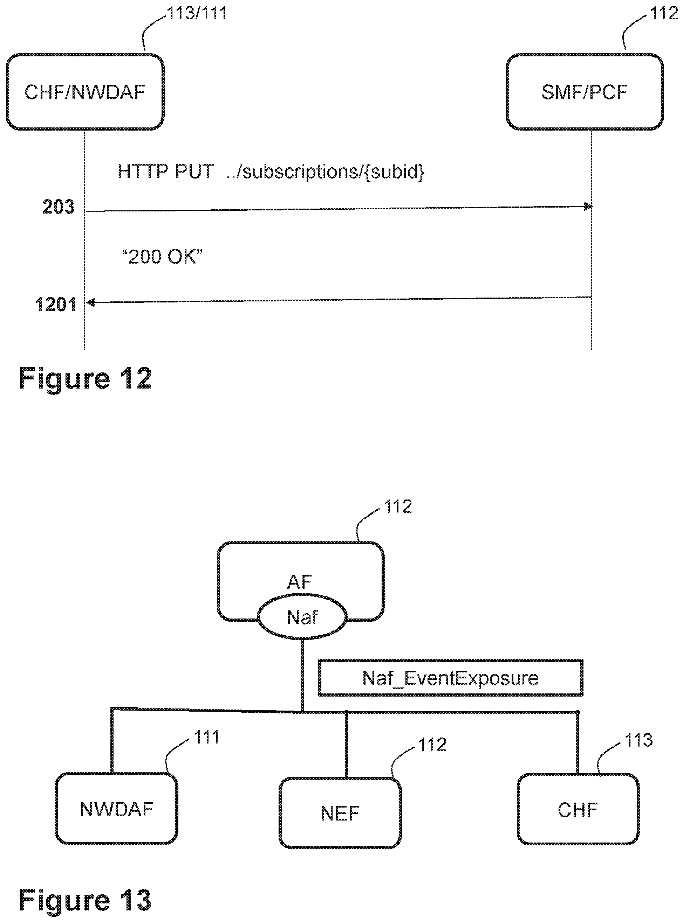

**Figure 12** is a schematic diagram illustrating a non-limiting example of the interface flow and message format for how the third node 113, as CHF, may change a subscription for events from the SMF and/or the PCF via the first node 111, as NWDAF, or directly, using an HTTP restful method. The first node 111 may change the subscription according to Action 203 and receive an acknowledgement of the change at 1201.

**Figure 13** is a schematic diagram illustrating a non-limiting example of embodiments herein, wherein an AF reports the one or more first indications for a specific communication device 131 or a set of communication devices 130. When the event occurs, the AF reports the requested information to NF service consumer, such as the first node 111, e.g., the NWDAF, or an NEF, and/or to the third node 113, e.g., the CHF, based on the event reporting information definition requested by the NF service consumer. The third node 113 as CHF is, according to embodiments herein a new NF consumer to receive periodic data for application services and type of subscriber activities detected.

**Further examples of use-cases:**

Embodiments herein may be understood to enable to track the data consumption by the one or more communication devices 130 for special events. When there may be degradation of QoS, the analytics information of the first node 111 according to embodiments herein may also be used, according to further examples of use cases of embodiments herein, to offer better services to subscribers who may wish to change the subscription plans based on the real time information provided, as illustrated in the examples below. According to these further examples, charging policies and quality of services, e.g., GBR, may be altered based on real time usage and analytics. Performance of core network functions may be analyzed by the one or more second nodes 112. The activity of subscribers per region, data consumption UL/DL per region and other metrics may be considered to derive the predictability and changing the charging paradigm.

*Example 1*

Assume that a popular event/gathering is happening in certain area where large crowd is gathered. There is 5G network deployed in that specific area. Data consumption and SMS activity may be understood to be higher as compared to normal days. Users may be connected to the 5G network and data consumption may be high resulting in high utilization of PCF, SMF, AF and UPF network functions handling data services.

The first node 111 may subscribe, according to Action 201, for data consumption of users from the SMF/UPF, and QoS policies from the PCF. The first node 111 may then analyze these data, according to Action 205, and send the analytics to the third node 113, which may further analyze the received analytics information of valued users who may have opted for the facility to enable upgradation of services and may then send, according to Action 303, an USSD/SMS/App notification to users offering a temporary plan change for providing a better quality of service. Upon receiving confirmation from a user, according to Action 304, policies for the user may be changed to offer higher QoS, according to Action 305.

*Example 2*

A specific area may be observed to have low consumption for data, based on real time analytics, according to Action 205. A discount may be offered, according to Action 303, to consumers of the area for data, so that usage of bandwidth may be distributed in areas with low consumption and over-usage in other areas may be prevented.

As may be understood from the foregoing, analytics-based charging may be applied to all business use cases in 5G network. Dynamically charging subscribers based on predictive algorithms considering subscriber density per track area, user activity in major events in specific areas, and emergency services. Charging may therefore be made more flexible based on predictivity by analyzing data collected from SMF, PCF and AF node via NEF or directly interacting with AF network function.

5G Analytics based predictive charging according to these further examples may be applied to data sessions. Charging rules may be also change. Analytics based charging may be understood to help telecommunications operators to provide better services when specific events may take place in certain locations, and millions of subscribers may be located in the same region. In such a scenario, dynamically configured analytics functionality and analyzing data received from the one or more second nodes 112 may help to determine the load on the system.

Based on post data analysis and density of subscriber charging rates may be may changed. For example, when congestion may be observed in the UPF and the SMF, where the CPU load may be high, the quota allocation may be changed dynamically to reduce the consumption and some of the sessions may be rejected. The period during which the one or more first indications may be collected may be configurable at the first node 111. When the UPF and the SMF load may be quite high and the rejections may be quite high, the third node 113 may trigger a change to the rating due to this and charging sessions may be controlled.

For example, once the third node 113 may get a notification via the second indication received from the first node 111 about a QoS degradation, as indicated by the QoS going below a configured low threshold, the third node 113 may analyze, according to Action 303, whether it may offer any alternate temporary plan to circumvent the QoS degradation. Based on the event parameters, via the REST http2 request, a rating function managed by the third node 113 may categorize this as a differential rating request and may run through the products which may offer better QoS. If there is major difference for observed QoS and negotiated QoS, the third node 113 may notify any subscriber of the communication devices 130, e.g., using a USSD and/or an sms. Once a better plan may be found, the third node 113 may trigger a USSD and/or an sms notification to the end user, asking if the user may want a better QoS at a higher rate temporarily.

Once a user may confirm the offered changed plan in the fourth indication, the third node 113 may generate events and change the rating for the subscriber for a specific time and generate a policy event before notifying about the changed policy threshold by sending the fifth indication. Polices for the targeted subscriber may be realigned as GBR bearer for a specified interval of time.

The third node 113 may use the second indication to change the rating plan of the subscriber to meet the increasing QoS demands at any particular moment. The new plan may be pre-determined or based on a recommendation and/or ability of the first node 111 to predict how different users may use data consumption or network slices in a way which may provide greater dynamism for data sessions, low latency services, massive machine type communications and vehicle to anything (V2X) services. Predictive charging may be applied for critical data sessions (URLLC), or a premium subscriber base.

In some examples, the third node 113 may goes through Call Data Records (CDR) generated and collect a set of MSISDNs or IMSIs for which analytics-based charging may be needed.

The third node 113, in these further examples, may can trigger several other ratings and charging actions based on the insights it may receive as input from the first node 111. Some of them may be personalized discount offers on specific rating-groups based on usage thresholds configured. A further specific example of the third indication may be to send a parental supervision SMS as the third indication, which may be triggered for shared accounts when a call duration and/or call cost may exceed a configured threshold. Another further specific example of the third indication may be on-call, personalized intervention announcements when data usage and/or call duration may exceed configured thresholds. Yet another specific example of the third indication may be alarms triggered to a parent when shared accounts may be in a certain location and/or calling certain numbers.

There may be several ways in which the third node 113 may take action, e.g., terminating the call and/or triggering an SMS, the third node 113 may charge for it with customized and/or configured thresholds defined by subscriber and monitored using the first node 111.

Certain embodiments may provide one or more of the following technical advantage(s). Embodiments herein may be understood to enable to provide better QoS and GBR to customers. Embodiments herein may be understood to enable to make a more efficient use of the resources of the communications network 10, so that QoS may be maintained, dynamically, on real time.

An advantage of the further examples of embodiments herein may be understood to be that analytics-based charging may provide dynamically changing charging based on activities performed in various regions. Analytics based charging may be understood to significantly improve the predictability with a negligible error margin, since the analytics data may be collected in quick periodic intervals. Embodiments herein may be understood to enable to provide better QoS and GBR to customers that may be subscribing for upgrade.

In terms of cloud implementation, 5G analytics based QoS management and interfaces development according to embodiments herein may be best suited for Cloud Native platforms such as Kubernetes. Kubernetes may be installed and may run application traffic on Bare-metal or Virtual machines. All the interfaces and network functions of 5G may be understood to already support cloud native and the enhancing new functionalities disclosed herein, such as the analytics based QoS management may help running scheduled jobs. Kubernetes (K8s) pods may handle analytics functionality independently, and the core functionality of QoS management on different pods. This may be understood to enable that may be CHF, SMF, PCF and AF functions may not impact the ongoing core functionality.

A Kubernetes based infrastructure may be used for development and hosting analytics based QoS management in cloud native platforms. K8s Pods may have scheduled jobs with auto scaling as desired based on the load in the system. A Kubernetes architecture may contain a master node and worker nodes. Worker nodes may schedule application related tasks on different pods. Core QoS management functions may be implemented in separate pods and analytics specific functionality in separate pod so that core functionality may not be impacted.

Integration of analytics data output may be mapped to a rating system so that subscriber services, existing rating groups and billing options may be analyzed, and subsequent offers may be provided based on the existing subscribed data. An unstructured supplementary Service Data (USSD) message may be used to notify the one or more communication devices 130 about the new data rates or available data in GB and flexible options may be provided.

Separate Pod for Analytics and a replicate set may be implemented to handle high availability. Online QoS management Pods may be configured as another replica set. Communication between an analytics pod and online QoS management pods may be achieved using a side car container or another container which may act as a helper pod to provide analytics data to AAA Pods to analyze and map analytics data to a rating group.

The functionalities that may be supported in an AAA Pod may be: a) core functionalities of AAA implemented, b) analytics output parameters data rates observed for a communication device 131 or group of communication devices 130, c) data rates may be compared with negotiated QoS rates. If there is any difference, a USSD may be triggered to notify the one or more communication devices 130 about better service provided, and d) a side car container implemented for synchronizing data between Analytics Pod and AAA Pod.

It may be possible that network functions such as NWDAF, PCF, SMF, AF may be defined as a replicate set of their own and may be hosted in the same bare metal server with a K8s environment. These network functions may be hosted on cloud platforms. Virtual machine platforms may also support a Kubernetes environment and the same design principles outlined above may be followed.

Dimensioning and horizontal scaling of individual services may be possible with auto scale in/out and may not cause any impact to core services. An ingress controller may provide resolving to different domains. Analytics pods may be configured with one Fully qualified domain (FQDN) and Authentication Authorization and Accounting (AAA) pods with one or more FQDNs and configured in Domain Name Server (DNS). An ingress controller may take care of resolving domains and routing traffic to the appropriate pods with the help of a Kube-Proxy.

Some functionalities may be implemented in each container in an analytics pod and in an AAA pod. The functionalities that may be supported in an analytics pod may be: a) subscriptions for events towards the SMF, PCF and NF network functions as described earlier, b) configuration of events in the third node 113, c) handling of exposure of events and analyzing the data from SMF, PCF and AF, d) providing analytics data to a rating group.

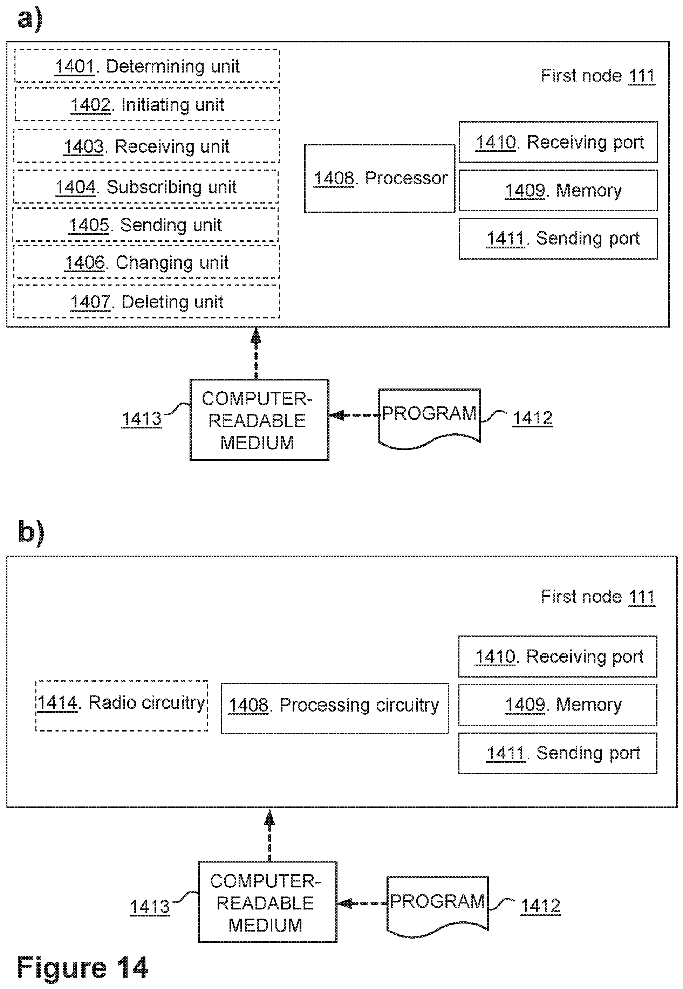

**Figure 14** depicts two different examples in panels a) and b), respectively, of the arrangement that the first node 111 may comprise to perform the method actions described above in relation to Figure 2. In some embodiments, the first node 111 may comprise the following arrangement depicted in **Figure 14a.** The first node 111 may be understood to be for handling quality of service in the communications network 10. The first node 111 is configured operate in the communications network 10.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the first node 111 and will thus not be repeated here. For example, in some embodiments, the first node 111 may be configured to be NWDAF, the one or more second nodes 112 may be configured to comprise at least one of: an SMF, a UPF, an AF, and a PCF, and the third node 113 may be configured to be a CHF. In other embodiments, the first node 111 may be configured to be an MDAF, the one or more second nodes 112 may be configured to comprise at least one of: an SMF, a UPF, an AF, and a PCF, the third node 113 is configured to be a CHF, and the first node 111 may be configured to receive the one or more first indications via an NWDAF.

In Figure 14, optional units are indicated with dashed boxes.

The first node 111 is configured to, e.g. by means of a **determining unit 1401** within the first node 111 configured to, determine, in real time, whether or not a respective quality of service threshold is predicted to be exceeded or underachieved in respective communications configured to be provided to the one or more communication devices 130 operating in the communications network 10. The determining is configured to be based the on one or more first indications configured to be received, in real time, from the one or more second nodes 112 configured to operate in the communications network 10 The one or more first indications may be configured to indicate, in real time, the one or more respective quality of service parameters for the respective communications configured to be provided to the one or more communication devices 130.

The first node 111 is configured to, e.g. by means of an **initiating unit 1402** within the first node 111 configured to, initiate the redistribution of the bandwidth available in the communications network 10 to at least one of the one or more communication devices 130. The initiation of the redistribution is configured to be based on a result of the determination.

In some embodiments, the redistribution of the bandwidth may be configured to be in real time.

In real time may be configured to be while a PDP session, for which the one or more indications are configured to be received, may be configured to be ongoing.

Initiating the redistribution of the bandwidth may be configured to comprise initiating providing the second indication to the third node 113 configured to operate in the communications network 10. The second indication may be configured to indicate the result of the determination.

In some embodiments, the first node 111 may be further configured to, e.g. by means of a **receiving unit 1403** within the first node 111 configured to, receive the subscription from the third node 113 to receive the second indication in real time. The providing of the second indication may be configured to be based on the subscription configured to be received.

In some embodiments, the second indication may be configured to comprise at least one of: a) the data consumption per at least one of: geographical area, radio coverage area, network slice, communication device 130, and/or group of communication devices 130, b) the type of data used, c) the uplink and/or downlink data usage per communication device 130 and/or per group of communication devices 130, d) the quality of service provisioned for data sessions per communication device 130 and/or per group of communication devices 130, and e) the application usage data per communication device 130 and/or per group of communication devices 130.

In some embodiments, the first node 111 may be further configured to, e.g. by means of a **subscribing unit 1404** within the first node 111 configured to, subscribe with the one or more second nodes 112 to receive the one or more first indications in real time.

In some alternative embodiments to those of the last paragraph, the first node 111 may be further configured to, e.g. by means of a **sending unit 1405** within the first node 111 configured to, send the one or more requests to the one or more second nodes 112 to receive the one or more first indications in real time.

In some embodiments, the first node 111 may be configured to, e.g. by means of the **receiving unit 1403** within the first node 111 configured to, receive the one or more first indications in real time from the one or more second nodes 112 based on one of: a) the one or more subscriptions, and b) the one or more requests configured to be sent. The one or more first indications may be configured to be received as one or more responses.

In some embodiments, the second indication may be further configured to comprise at least one of: a) the data consumption per geographical area, communication device 130, group of communication devices 130 and/or per radio coverage area received from a Session Management Function, SMF, b) the type of data used from an SMF, c) the uplink and/or downlink data usage per communication device 130 and/or per group of communication devices 130 from an SMF, d) the quality of service provisioned for data sessions per communication device 130 and/or per group of communication devices 130 received from a PCF, and e) the application usage data per communication device 130 and/or per group of communication devices 130 received from an AF.

In some embodiments, the first node 111 may be further configured to, e.g. by means of a **changing unit 1406** within the first node 111 configured to, change at least one of the one or more subscriptions.

In some alternative embodiments to those of the last paragraph, the first node 111 may be further configured to, e.g. by means of a **deleting unit 1407** within the first node 111 configured to, delete at least one of the one or more subscriptions.

In some embodiments, the first node 111 may be configured to, e.g. by means of a **receiving unit 1407** within the first node 111 configured to, receive the one or more first indications in real time from the one or more second nodes 112 based on one of: a) the one or more subscriptions, and b) the one or more requests configured to be sent. The one or more first indications may be configured to be received as one or more responses.

In some embodiments, the one or more first indications configured to be received may be further configured to be based on the at least one of the one or more subscriptions configured to be changed or deleted.

In some embodiments, the one or more first indications may be configured to indicate a real time QoS at the PDP level.

Other modules may be comprised in the first node 111.

The embodiments herein in the first node 111 may be implemented through one or more processors, such as a **processor 1408** in the first node 111 depicted in Figure 7a, together with computer program code for performing the functions and actions of the embodiments herein. A processor, as used herein, may be understood to be a hardware component. The program code mentioned above may also be provided as a computer program product, for instance in the form of a data carrier carrying computer program code for performing the embodiments herein when being loaded into the first node 111. One such carrier may be in the form of a CD ROM disc. It is however feasible with other data carriers such as a memory stick. The computer program code may furthermore be provided as pure program code on a server and downloaded to the first node 111.

The first node 111 may further comprise a **memory 1409** comprising one or more memory units. The memory 1409 is arranged to be used to store obtained information, store data, configurations, schedulings, and applications etc. to perform the methods herein when being executed in the first node 111.

In some embodiments, the first node 111 may receive information from, e.g., the one or more second nodes 112, the third node 113, the radio network node 150, and/or the one or more communication devices 130, through a **receiving port 1410.** In some embodiments, the receiving port 1410 may be, for example, connected to one or more antennas in first node 111. In other embodiments, the first node 111 may receive information from another structure in the communications network 10 through the receiving port 1410. Since the receiving port 1410 may be in communication with the processor 1408, the receiving port 1410 may then send the received information to the processor 1408. The receiving port 1410 may also be configured to receive other information.

The processor 1408 in the first node 111 may be further configured to transmit or send information to e.g., the one or more second nodes 112, the third node 113, the radio network node 150, the one or more communication devices 130, and/or another structure in the communications network 10, through a **sending port 1411,** which may be in communication with the processor 1408, and the memory 1409.

Those skilled in the art will also appreciate that the units 1401-1407, described above may refer to a combination of analog and digital modules, and/or one or more processors configured with software and/or firmware, e.g., stored in memory, that, when executed by the one or more processors such as the processor 1408, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Also, any of the units 1401-1407 described above may be respectively implemented as the processor 1408 of the first node 111, or an application running on such processor.

Thus, the methods according to the embodiments described herein for the first node 111 may be respectively implemented by means of a **computer program 1412** product, comprising instructions, i.e., software code portions, which, when executed on at least one processor 1408, cause the at least one processor 1408 to carry out the actions described herein, as performed by the first node 111. The computer program 1412 product may be stored on a **computer-readable storage medium 1413.** The computer-readable storage medium 1413, having stored thereon the computer program 1412, may comprise instructions which, when executed on at least one processor 1408, cause the at least one processor 1408 to carry out the actions described herein, as performed by the first node 111. In some embodiments, the computer-readable storage medium 1413 may be a non-transitory computer-readable storage medium, such as a CD ROM disc, or a memory stick. In other embodiments, the computer program 1412 product may be stored on a carrier containing the computer program 1412 just described, wherein the carrier is one of an electronic signal, optical signal, radio signal, or the computer-readable storage medium 1413, as described above.

The first node 111 may comprise an interface unit to facilitate communications between the first node 111 and other nodes or devices, e.g., the one or more second nodes 112, the third node 113, the radio network node 150, the one or more communication devices 130, and/or another structure in the communications network 10. In some particular examples, the interface may, for example, include a transceiver configured to transmit and receive radio signals over an air interface in accordance with a suitable standard.

In other embodiments, the first node 111 may comprise the following arrangement depicted in **Figure 7b.** The first node 111 may comprise a **processing circuitry 1408,** e.g., one or more processors such as the processor 1408, in the first node 111 and the memory 1409. The first node 111 may also comprise a **radio circuitry 1414,** which may comprise e.g., the receiving port 1410 and the sending port 1411. The processing circuitry 1408 may be configured to, or operable to, perform the method actions according to Figure 2, in a similar manner as that described in relation to Figure 7a. The radio circuitry 1414 may be configured to set up and maintain at least a wireless connection with any of the one or more second nodes 112, the third node 113, the radio network node 150, the one or more communication devices 130, and/or another structure in the communications network 10. Circuitry may be understood herein as a hardware component.

Hence, embodiments herein also relate to the first node 111 operative to handle quality of service in the communications network 10. The first node 111 may be operative to operate in the communications network 10. The first node 111 may comprise the processing circuitry 1408 and the memory 1409, said memory 1409 containing instructions executable by said processing circuitry 1408, whereby the first node 111 is further operative to perform the actions described herein in relation to the first node 111, e.g., in Figure 2.

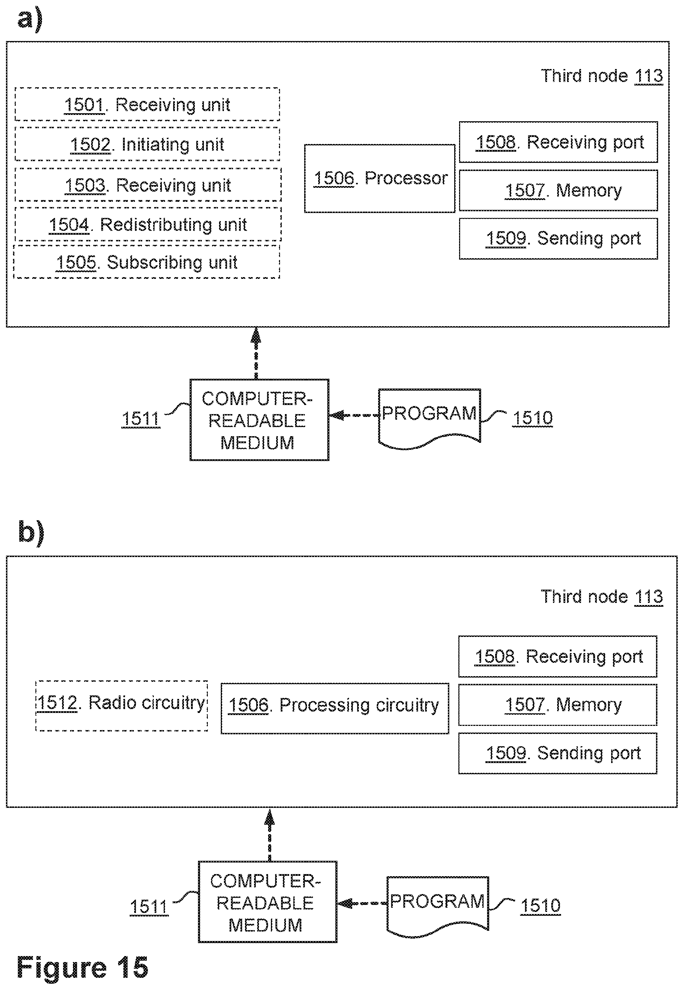

**Figure 15** depicts two different examples in panels a) and b), respectively, of the arrangement that the third node 113 may comprise to perform the method actions described above in relation to Figure 3. In some embodiments, the third node 113 may comprise the following arrangement depicted in **Figure 15a.** The third node 113 may be understood to be for handling quality of service in the communications network 10. The third node 113 is configured operate in the communications network 10.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the first node 111 and will thus not be repeated here. For example, in some embodiments, the first node 111 may be configured to be NWDAF, and the third node 113 may be configured to be a CHF. In other embodiments, the first node 111 may be configured to be an MDAF and the third node 113 is configured to be a CHF. The first node 111 may be configured to receive the one or more first indications via an NWDAF. The one or more second nodes 112 may be configured to comprise at least one of: an SMF, a UPF, an AF, and a PCF.

In Figure 15, optional units are indicated with dashed boxes.

The third node 113 is configured to, e.g. by means of a **receiving unit 1501** within the third node 113 configured to, receive, in real time, the second indication from the first node 111 configured to operate in the communications network 10. The second indication is configured to indicate whether or not the respective quality of service threshold is predicted to be exceeded or underachieved in respective communications configured to be provided to the one or more communication devices 130 configured to operate in the communications network 10.

The third node 113 is also configured to, e.g. by means of an **initiating unit 1502** within the third node 113 configured to, initiate the redistribution of the bandwidth available in the communications network 10 to at least one of the one or more communication devices 130. The initiation of the redistribution is configured to be based on the second indication configured to be received.

In some embodiments, the redistribution of the bandwidth may be configured to be in real time.

In real time may be configured to be while a PDP session may be configured to be ongoing.

Initiating the redistribution of the bandwidth available may be configured to comprise determining a) whether more or less bandwidth than that currently provided to a communication device 130 may be available to be offered for use by the communication device 130, and b) one or more conditions according to which the change of bandwidth may be to be provided.

According to the claimed invention, to initiate the redistribution of the bandwidth is configured to comprise providing the third indication to at least one of the one or more communication devices 130, configured to operate in the communications network 10. The third indication is configured to indicate the possibility to perform a change to increase or decrease the quality of service of at least one of the one or more communication devices 130.

In some embodiments, the third node 113 may be further configured to, e.g. by means of a **receiving unit 1503** within the third node 113 configured to, receive, in real time and in response to the third indication configured to be sent, the fourth indication from at least one of the one or more communication devices 130. The fourth indication may be configured to indicate whether the at least one of the one or more communication devices 130, may accept or reject the possibility to perform the change to increase or decrease the quality of service.

In some embodiments, the third node 113 may be further configured to, e.g. by means of a **redistributing unit 1504** within the third node 113 configured to, redistribute the bandwidth available in the communications network 10, based on the fourth indication configured to be received.

The redistributing of the bandwidth available may be configured to comprise a change in a policy of the at least one of the one or more communication devices 130.

In some embodiments, the redistributing of the bandwidth available may be configured to comprise sending the one or more fifth indications to the one or more second nodes 112 configured to operate in the communications network 10. The one or more second nodes 112 may be configured to comprise at least one of: an SMF, a UPF, an AF, and a PCF.

In some embodiments, the third node 113 may be further configured to, e.g. by means of a **subscribing unit 1505** within the third node 113 configured to, subscribe with the first node 111 to receive the second indication in real time. The receiving of the second indication may be configured to be based on the subscription.

In some embodiments, the third indication may be configured to be sent as a REST request.

In some embodiments, the second indication may be configured to comprise at least one of: a) the data consumption per at least one of: geographical area, radio coverage area, network slice, communication device 130, and/or group of communication devices 130, b) the type of data used, c) the uplink and/or downlink data usage per communication device 130 and/or per group of communication devices 130, d) the quality of service provisioned for data sessions per communication device 130 and/or per group of communication devices 130, and e) the application usage data per communication device 130 and/or per group of communication devices 130.

In some embodiments, the second indication may be further configured to comprise at least one of: a) the data consumption per geographical area, communication device 130, group of communication devices 130 and/or per radio coverage area received from a Session Management Function, SMF, b) the type of data used from an SMF, c) the uplink and/or downlink data usage per communication device 130 and/or per group of communication devices 130 from an SMF, d) the quality of service provisioned for data sessions per communication device 130 and/or per group of communication devices 130 received from a PCF, and e) the application usage data per communication device 130 and/or per group of communication devices 130 received from an AF.

In some embodiments, the one or more first indications may be configured to indicate a real time QoS at the PDP level.

Other modules may be comprised in the third node 113.

The embodiments herein in the third node 113 may be implemented through one or more processors, such as a **processor 1506** in the third node 113 depicted in Figure 7a, together with computer program code for performing the functions and actions of the embodiments herein. A processor, as used herein, may be understood to be a hardware component. The program code mentioned above may also be provided as a computer program product, for instance in the form of a data carrier carrying computer program code for performing the embodiments herein when being loaded into the third node 113. One such carrier may be in the form of a CD ROM disc. It is however feasible with other data carriers such as a memory stick. The computer program code may furthermore be provided as pure program code on a server and downloaded to the third node 113.

The third node 113 may further comprise a **memory 1507** comprising one or more memory units. The memory 1507 is arranged to be used to store obtained information, store data, configurations, schedulings, and applications etc. to perform the methods herein when being executed in the third node 113.

In some embodiments, the third node 113 may receive information from, e.g., the one or more second nodes 112, the third node 113, the radio network node 150, and/or the one or more communication devices 130, through a **receiving port 1508.** In some embodiments, the receiving port 1508 may be, for example, connected to one or more antennas in third node 113. In other embodiments, the third node 113 may receive information from another structure in the communications network 10 through the receiving port 1508. Since the receiving port 1508 may be in communication with the processor 1506, the receiving port 1508 may then send the received information to the processor 1506. The receiving port 1508 may also be configured to receive other information.

The processor 1506 in the third node 113 may be further configured to transmit or send information to e.g., the one or more second nodes 112, the third node 113, the radio network node 150, the one or more communication devices 130, and/or another structure in the communications network 10, through a **sending port 1509,** which may be in communication with the processor 1506, and the memory 1507.

Those skilled in the art will also appreciate that the units 1501-1507, described above may refer to a combination of analog and digital modules, and/or one or more processors configured with software and/or firmware, e.g., stored in memory, that, when executed by the one or more processors such as the processor 1506, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Also, any of the units 1501-1507 described above may be respectively implemented as the processor 1506 of the third node 113, or an application running on such processor.

Thus, the methods according to the embodiments described herein for the third node 113 may be respectively implemented by means of a **computer program 1510** product, comprising instructions, i.e., software code portions, which, when executed on at least one processor 1506, cause the at least one processor 1506 to carry out the actions described herein, as performed by the third node 113. The computer program 1510 product may be stored on a **computer-readable storage medium 1511.** The computer-readable storage medium 1511, having stored thereon the computer program 1510, may comprise instructions which, when executed on at least one processor 1506, cause the at least one processor 1506 to carry out the actions described herein, as performed by the third node 113. In some embodiments, the computer-readable storage medium 1511 may be a non-transitory computer-readable storage medium, such as a CD ROM disc, or a memory stick. In other embodiments, the computer program 1510 product may be stored on a carrier containing the computer program 1510 just described, wherein the carrier is one of an electronic signal, optical signal, radio signal, or the computer-readable storage medium 1511, as described above.

The third node 113 may comprise an interface unit to facilitate communications between the third node 113 and other nodes or devices, e.g., the one or more second nodes 112, the third node 113, the radio network node 150, the one or more communication devices 130, and/or another structure in the communications network 10. In some particular examples, the interface may, for example, include a transceiver configured to transmit and receive radio signals over an air interface in accordance with a suitable standard.

In other embodiments, the third node 113 may comprise the following arrangement depicted in **Figure 7b.** The third node 113 may comprise a **processing circuitry 1506,** e.g., one or more processors such as the processor 1506, in the third node 113 and the memory 1507. The third node 113 may also comprise a **radio circuitry 1512,** which may comprise e.g., the receiving port 1508 and the sending port 1509. The processing circuitry 1506 may be configured to, or operable to, perform the method actions according to Figure 3, in a similar manner as that described in relation to Figure 7a. The radio circuitry 1512 may be configured to set up and maintain at least a wireless connection with any of the one or more second nodes 112, the third node 113, the radio network node 150, the one or more communication devices 130, and/or another structure in the communications network 10. Circuitry may be understood herein as a hardware component.

Hence, embodiments herein also relate to the third node 113 operative to handle quality of service in the communications network 10. The third node 113 may be operative to operate in the communications network 10. The third node 113 may comprise the processing circuitry 1506 and the memory 1507, said memory 1507 containing instructions executable by said processing circuitry 1506, whereby the third node 113 is further operative to perform the actions described herein in relation to the third node 113, e.g., in Figure 3.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

As used herein, the expression "at least one of:" followed by a list of alternatives separated by commas, and wherein the last alternative is preceded by the "and" term, may be understood to mean that only one of the list of alternatives may apply, more than one of the list of alternatives may apply or all of the list of alternatives may apply. This expression may be understood to be equivalent to the expression "at least one of:" followed by a list of alternatives separated by commas, and wherein the last alternative is preceded by the "or" term.

**Claims**

1. A method, performed by a first node (111), the method being for handling quality of service in a communications network (10), the first node (111) operating the communications network (10), the method comprising:

   - *determining* (205), in real time, whether or not a respective quality of service threshold is predicted to be exceeded or underachieved in respective communications provided to one or more communication devices (130) operating in the communications network (10), the determining (205) being based on one or more first indications received, in real time, from one or more second nodes (112) operating in the communications network (100), the one or more first indications indicating, in real time, one or more respective quality of service parameters for the respective communications provided to the one or more communication devices 130, and
   - *initiating* (206) a redistribution of a bandwidth available in the communications network (10) to at least one of the one or more communication devices 130, the initiation (206) of the redistribution being based on a result of the determination, wherein initiating (206) the redistribution of the bandwidth comprises initiating providing a second indication to a third node (113) operating in the communications network (10), the second indication indicating a result of the determination.

2. The method according to claim 1, wherein the redistribution of the bandwidth is in real time.

3. The method according to claim 1, the method further comprising:

   - *receiving* (200) a subscription from the third node (113) to receive the second indication in real time, and wherein the providing of the second indication is based on the received subscription.

4. The method according to claims 1 or 3, wherein the second indication comprises at least one of:

   a. data consumption per at least one of: geographical area, radio coverage area, network slice, communication device (130), and/or group of communication devices (130),
   b. type of data used,
   c. uplink and/or downlink data usage per communication device (130) and/or per group of communication devices (130),
   d. quality of service provisioned for data sessions per communication device (130) and/or per group of communication devices (130), and
   e. application usage data per communication device (130) and/or per group of communication devices (130).

5. The method according to any of claims and 1-4, wherein the method further comprises:

   a) one of:

      - *subscribing* (201a) with the one or more second nodes (112) to receive the one or more first indications in real time, and
      - *sending* (201 b) one or more requests to the one or more second nodes (112) to receive the one or more first indications in real time, and

   b)

      - *receiving* (202) the one or more first indications in real time from the one or more *second* nodes (112) based on one of:

         a) the one or more subscriptions, and
         b) the sent one or more requests, wherein the one or more first indications are received as one or more responses.

6. The method according to claim 5, wherein the second indication comprises at least one of:

   a. data consumption per geographical area, communication device (130), group of communication devices (130) and/or per radio coverage area received from a Session Management Function, SMF,
   b. type of data used from an SMF,

c. uplink and/or downlink data usage per communication device (130) and/or per group of communication devices (130) from an SMF,

d. quality of service provisioned for data sessions per communication device (130) and/or per group of communication devices (130) received from a Policy Control Function, PCF, and

e. application usage data per communication device (130) and/or per group of communication devices (130) received from an Application Function, AF.

7. The method according to any of claims and 5-6, the method further comprising one of: - *changing* (202) at least one of the one or more subscriptions, and

- *deleting* (203) at least one of the one or more subscriptions, and wherein the received one or more first indications are further based on the changed or deleted at least one of the one or more subscriptions.

8. The method according to any of claims 1-7, wherein the first node (111) is an a Network Data Analytics Function, NWDAF, the one or more second nodes (112) comprise at least one of: an SMF, a User Plane Function, UPF, an AF, and a PCF, and the third node (113) is a Converged Charging Function, CHF.

9. The method according to any of claims 1-8, wherein the first node (111) is a Management and Data Analytics Function, MDAF, the one or more second nodes (112) comprise at least one of: an SMF, a UPF, an AF, and a PCF, the third node (113) is a CHF, and wherein the first node (111) receives the one or more first indications via an NWDAF.

10. A method, performed by a third node (113), the method being for handling quality of service in a communications network (10), the third node (113) operating the communications network (10), the method comprising:

- *receiving* (302), in real time, a second indication from a first node (111) operating in the communications network (10), the second indication indicating whether or not a respective quality of service threshold is predicted to be exceeded or underachieved in respective communications provided to one or more communication devices (130) operating in the communications network (10), and

- *initiating* (303) a redistribution of a bandwidth available in the communications network (10) to at least one of the one or more communication devices 130, the initiation (303) of the redistribution being based on the received second indication, wherein initiating (303) the redistribution of the bandwidth comprises *providing* a third indication to at least one of the one or more communication devices 130, operating in the communications network (10), the third indication indicating a possibility to perform a change to increase or decrease the quality of service of at least one of the one or more communication devices 130.

11. The method according to claim 10, wherein the method further comprises:

- *receiving* (304), in real time and in response to the sent third indication, a fourth indication from at least one of the one or more communication devices 130, the fourth indication indicating whether the at least one of the one or more communication devices 130, accepts or rejects the possibility to perform the change to increase or decrease the quality of service, and

- *redistributing* (305) the bandwidth available in the communications network (10), based on the received fourth indication.

12. The method according to any of claims 10-11, the method further comprising:

- *subscribing* (301) with the first node (111) to receive the second indication in real time, and wherein the receiving of the second indication is based on the subscription.

13. The method according to claim 12, wherein the second indication further indicates at least one of:

a. data consumption per geographical area, communication device (130) and/or per group of communication devices (130), and/or per radio coverage area received from a Session Management Function, SMF,

b. type of data used from an SMF,

c. uplink and/or downlink data usage per communication device (130) and/or per group of communication devices (130) received from an SMF,

d. quality of service provisioned for data sessions per communication device (130) and/or per group of communication devices (130) received from a Policy Control Function, PCF, and

e. application usage data per communication device (130) and/or per group of communication devices (130) received from an Application Function, AF.

14. The method according to any of claims 12-13, wherein the first node (111) is a Management and Data Analytics Function, MDAF, and the third node (113) is a Converged Charging Function, CHF.

15. A first node (111), for handling quality of service in a communications network (10), the first node (111) being configured to operate in the a communications network (10), the first node (111) being further configured to:

- determine, in real time, whether or not a respective quality of service threshold is predicted to be exceeded or underachieved in respective communications configured to be provided to one or more communication devices (130) operating in the communications network (10), the determining being configured to be based on one or more first indications configured to be received, in real time, from one or more second nodes (112) configured to operate in the communications network (100), the one or more first indications being configured to indicate, in real time, one or more respective quality of service parameters for the respective communications configured to be provided to the one or more communication devices 130, and
- initiate a redistribution of a bandwidth available in the communications network (10) to at least one of the one or more communication devices 130, the initiation of the redistribution being configured to be based on a result of the determination, wherein to initiate the redistribution of the bandwidth comprises to initiate providing a second indication to a third node (113) operating in the communications network (10), the second indication indicating a result of the determination.

16. A third node (113), for handling quality of service in a communications network (10), the third node (113) being configured to operate in the a communications network (10), the third node (113) being further configured to:

- receive, in real time, a second indication from a first node (111) configured to operate in the communications network (10), the second indication being configured to indicate whether or not a respective quality of service threshold is predicted to be exceeded or underachieved in respective communications configured to be provided to one or more communication devices (130) configured to operate in the communications network (10), and
- initiate (303) a redistribution of a bandwidth available in the communications network (10) to at least one of the one or more communication devices 130, the initiation (303) of the redistribution being configured to be based on the second indication configured to be received, wherein to initiate (303) the redistribution of the bandwidth comprises providing a third indication to at least one of the one or more communication devices 130, operating in the communications network (10), the third indication indicating a possibility to perform a change to increase or decrease the quality of service of at least one of the one or more communication devices 130.

**Patentansprüche**

1. Verfahren, durchgeführt durch einen ersten Knoten (111), wobei das Verfahren zum Handhaben von Dienstqualität in einem Kommunikationsnetz (10) ist, wobei der erste Knoten (111) das Kommunikationsnetz (10) bedient, wobei das Verfahren Folgendes umfasst:

- *Bestimmen* (205), in Echtzeit, ob vorausgesagt wird, dass ein jeweiliger Dienstqualitätsschwellenwert in jeweiliger Kommunikation, die einer oder mehreren Kommunikationsvorrichtungen (130) bereitgestellt wird, die in dem Kommunikationsnetz (10) arbeiten, überschritten wird oder unterdurchschnittlich ist oder nicht, wobei das Bestimmen (205) auf einer oder mehreren ersten Angaben basiert, die in Echtzeit von einem oder mehreren zweiten Knoten (112) empfangen werden, die in dem Kommunikationsnetz (100) arbeiten, wobei die eine oder mehreren ersten Angaben in Echtzeit einen oder mehrere jeweilige Dienstqualitätsparameter für die jeweilige Kommunikation angeben, die der einen oder den mehreren Kommunikationsvorrichtungen 130 bereitgestellt wird, und
- *Initiieren* (206) einer Neuverteilung einer Bandbreite, die in dem Kommunikationsnetz (10) verfügbar ist, an mindestens eine von der einen oder den mehreren Kommunikationsvorrichtungen 130, wobei die Initiierung (206) der Neuverteilung auf einem Ergebnis der Bestimmung basiert, wobei das Initiieren (206) der Neuverteilung der Bandbreite Initiieren von Bereitstellen einer zweiten Angabe an einen dritten Knoten (113), der in dem Kommunikationsnetz (10) arbeitet, umfasst, wobei die zweite Angabe ein Ergebnis der Bestimmung angibt.

2. Verfahren nach Anspruch 1, wobei die Neuverteilung der Bandbreite in Echtzeit ist.

3. Verfahren nach Anspruch 1, wobei das Verfahren ferner Folgendes umfasst:

- *Empfangen* (200) eines Abonnements von dem dritten Knoten (113), um die zweite Angabe in Echtzeit zu empfangen, und wobei das Bereitstellen der zweiten Angabe auf dem empfangenen Abonnement basiert.

4. Verfahren nach Anspruch 1 oder 3, wobei die zweite Angabe mindestens eines von Folgendem umfasst:

a. Datenverbrauch durch mindestens eines von: geographischem Bereich, Funkabdeckungsbereich, Network-Slice, Kommunikationsvorrichtung (130) und/oder Gruppe von Kommunikationsvorrichtungen (130),
b. Art von verwendeten Daten,
c. Uplink- und/oder Downlink-Datennutzung pro Kommunikationsvorrichtung (130) und/oder pro Gruppe von Kommunikationsvorrichtungen (130),
d. Dienstqualität, die für Datensitzungen pro Kommunikationsvorrichtung (130) und/oder pro Gruppe von Kommunikationsvorrichtungen (130) vorgesehen ist, und
e. Anwendungsnutzungsdaten pro Kommunikationsvorrichtung (130) und/oder pro Gruppe von Kommunikationsvorrichtungen (130).

5. Verfahren nach einem der Ansprüche und 1-4, wobei das Verfahren ferner Folgendes umfasst:

a) eines von:

- *Abonnieren* (201a) des einen oder der mehreren zweiten Knoten (112), um die eine oder mehreren Angaben in Echtzeit zu empfangen, und
- *Senden* (201b) von einer oder mehreren Anfragen an den einen oder die mehreren zweiten Knoten (112), um die eine oder mehreren ersten Angaben in Echtzeit zu empfangen, und

b)

- *Empfangen* (202) der einen oder mehreren ersten Angaben in Echtzeit von dem einen oder den mehreren *zweiten* Knoten (112) basierend auf einem von:

a) dem einen oder den mehreren Abonnements, und
b) der gesendeten einen oder mehreren Anfragen, wobei die eine oder mehreren ersten Angaben als eine oder mehrere Antworten empfangen werden.

6. Verfahren nach Anspruch 5, wobei die zweite Angabe mindestens eines von Folgendem umfasst:

a. Datenverbrauch pro geographischem Bereich, Kommunikationsvorrichtung (130), Gruppe von Kommunikationsvorrichtungen (130) und/oder pro Funkabdeckungsbereich, der von einer Sitzungsverwaltungsfunktion, SMF, empfangen wird,
b. Art von verwendeten Daten von einer SMF,
c. Uplink- und/oder Downlink-Datennutzung pro Kommunikationsvorrichtung (130) und/oder pro Gruppe von Kommunikationsvorrichtungen (130) von einer SMF,
d. Dienstqualität, die für Datensitzungen pro Kommunikationsvorrichtung (130) und/oder pro Gruppe von Kommunikationsvorrichtungen (130), die von einer Richtliniensteuerfunktion, PCF, empfangen wird, vorgesehen ist, und
e. Anwendungsnutzungsdaten pro Kommunikationsvorrichtung (130) und/oder pro Gruppe von Kommunikationsvorrichtungen (130), die von einer Anwendungsfunktion, AF, empfangen werden.

7. Verfahren nach einem der Ansprüche und 5-6, wobei das Verfahren ferner eines von Folgendem umfasst:

- *Ändern* (202) von mindestens einem von dem einen oder den mehreren Abonnements, und
- *Löschen* (203) von mindestens einem von dem einen oder den mehreren Abonnements, und wobei die empfangene eine oder mehreren ersten Angaben ferner auf dem geänderten oder gelöschten mindestens einen von dem einen oder den mehreren Abonnements basieren.

8. Verfahren nach einem der Ansprüche 1-7, wobei der erste Knoten (111) eine Netzdatenanalysefunktion, NWDAF, ist, wobei der eine oder die mehreren zweiten Knoten (112) mindestens eines von Folgendem umfassen: einer SMF, einer Benutzerebenenfunktion, UPF, einer AF und einer PCF, und der dritte Knoten (113) eine konvergierte Ladefunktion, CHF, ist.

9. Verfahren nach einem der Ansprüche 1-8, wobei der erste Knoten (111) eine Verwaltungs- und Datenanalysefunktion, MDAF, ist, wobei der eine oder die mehreren zweiten Knoten (112) mindestens eines von Folgendem umfassen: einer SMF, einer UPF, einer AF und einer PCF, wobei der dritte Knoten (113) eine CHF ist, und wobei der erste Knoten (111) die eine oder mehreren ersten Angaben über eine NWDAF empfängt.

10. Verfahren, durchgeführt durch einen dritten Knoten (113), wobei das Verfahren zum Handhaben von Dienstqualität in einem Kommunikationsnetz (10) ist, wobei der dritte Knoten (113) das Kommunikationsnetz (10) bedient, wobei das Verfahren Folgendes umfasst:

- *Empfangen* (302), in Echtzeit, einer zweiten Angabe von einem ersten Knoten (111), der in dem Kommunikationsnetz (10) arbeitet, wobei die zweite Angabe angibt, ob vorausgesagt wird, dass ein jeweiliger Dienstqualitätsschwellenwert in jeweiliger Kommunikation, die einer oder mehreren Kommunikationsvorrichtungen (130) bereitgestellt wird, die in dem Kommunikationsnetz (10) arbeiten, überschritten wird oder unterdurchschnittlich ist oder nicht, und
- *Initiieren* (303) einer Neuverteilung einer Bandbreite, die in dem Kommunikationsnetz (10) verfügbar ist, an mindestens eine von der einen oder den mehreren Kommunikationsvorrichtungen 130, wobei die Initiierung (303) der Neuverteilung auf der empfangenen zweiten Angabe basiert, wobei das Initiieren (303) der Neuverteilung der Bandbreite *Bereitstellen* einer dritten Angabe an mindestens eine von der einen oder den mehreren Kommunikationsvorrichtungen 130, die in dem Kommunikationsnetz (10) arbeiten, umfasst, wobei die dritte Angabe eine Möglichkeit angibt, eine Änderung durchzuführen, um die Dienstqualität von mindestens einer von der einen oder den mehreren Kommunikationsvorrichtungen 130 zu erhöhen oder zu verringern.

11. Verfahren nach Anspruch 10, wobei das Verfahren ferner Folgendes umfasst:

- *Empfangen* (304), in Echtzeit und als Antwort auf die gesendete dritte Angabe, einer vierten Angabe von mindestens einer von der einen oder den mehreren Kommunikationsvorrichtungen 130, wobei die vierte Angabe angibt, ob die mindestens eine von der einen oder den mehreren Kommunikationsvorrichtungen 130 die Möglichkeit, die Änderung durchzuführen, um die Dienstqualität zu erhöhen oder zu verringern, annimmt oder ablehnt, und
- *Neuverteilen* (305) der Bandbreite, die in dem Kommunikationsnetz (10) verfügbar ist, basierend auf der empfangenen vierten Angabe.

12. Verfahren nach einem der Ansprüche 10-11, wobei das Verfahren ferner Folgendes umfasst:

- *Abonnieren* (301) des ersten Knotens (111), um die zweite Angabe in Echtzeit zu empfangen, und wobei das Empfangen der zweiten Angabe auf dem Abonnement basiert.

13. Verfahren nach Anspruch 12, wobei die zweite Angabe ferner mindestens eines von Folgendem angibt:

a. Datenverbrauch pro geographischem Bereich, Kommunikationsvorrichtung (130) und/oder pro Gruppe von Kommunikationsvorrichtungen (130) und/oder pro Funkabdeckungsbereich, der von einer Sitzungsverwaltungsfunktion, SMF, empfangen wird,
b. Art von verwendeten Daten von einer SMF,
c. Uplink- und/oder Downlink-Datennutzung pro Kommunikationsvorrichtung (130) und/oder pro Gruppe von Kommunikationsvorrichtungen (130), die von einer SMF empfangen wird,
d. Dienstqualität, die für Datensitzungen pro Kommunikationsvorrichtung (130) und/oder pro Gruppe von Kommunikationsvorrichtungen (130), die von einer Richtliniensteuerfunktion, PCF, empfangen wird, vorgesehen ist, und
e. Anwendungsnutzungsdaten pro Kommunikationsvorrichtung (130) und/oder pro Gruppe von Kommunikationsvorrichtungen (130), die von einer Anwendungsfunktion, AF, empfangen werden.

14. Verfahren nach einem der Ansprüche 12-13, wobei der erste Knoten (111) eine Verwaltungs- und Datenanalysefunktion, MDAF, ist, und der dritte Knoten (113) eine konvergierte Ladefunktion, CHF, ist.

15. Erster Knoten (111) zum Handhaben von Dienstqualität in einem Kommunikationsnetz (10), wobei der erste Knoten (111) dazu konfiguriert ist, in dem einen Kommunikationsnetz (10) zu arbeiten, wobei der erste Knoten (111) ferner zu Folgendem konfiguriert ist:

- Bestimmen, in Echtzeit, ob vorausgesagt wird, dass ein jeweiliger Dienstqualitätsschwellenwert in jeweiliger Kommunikation, die dazu konfiguriert ist, einer oder mehreren Kommunikationsvorrichtungen (130) bereitgestellt zu werden, die in dem Kommunikationsnetz (10) arbeiten, überschritten wird oder unterdurchschnittlich ist oder nicht, wobei das Bestimmen dazu konfiguriert ist, auf einer oder mehreren ersten Angaben zu basieren, die dazu konfiguriert sind, in Echtzeit von einem oder mehreren zweiten Knoten (112) empfangen zu werden, die dazu konfiguriert sind, in dem Kommunikationsnetz (100) zu arbeiten, wobei die eine oder mehreren ersten Angaben dazu konfiguriert sind, in Echtzeit einen oder mehrere jeweilige Dienstqualitätsparameter für die jeweilige Kommunikation anzugeben, die dazu konfiguriert ist, der einen oder den mehreren Kommunikationsvorrichtungen 130 bereitgestellt zu werden, und
- Initiieren einer Neuverteilung einer Bandbreite, die in dem Kommunikationsnetz (10) verfügbar ist, an mindestens eine von der einen oder den mehreren Kommunikationsvorrichtungen 130, wobei die Initiierung der Neuverteilung dazu konfiguriert ist, auf einem Ergebnis der Bestimmung zu basieren, wobei das Initiieren der Neuverteilung der Bandbreite Initiieren von Bereitstellen einer zweiten Angabe an einen dritten Knoten (113), der in dem Kommunikationsnetz (10) arbeitet, umfasst, wobei die zweite Angabe ein Ergebnis der Bestimmung angibt.

16. Dritter Knoten (113) zum Handhaben von Dienstqualität in einem Kommunikationsnetz (10), wobei der dritte Knoten (113) dazu konfiguriert ist, in dem einen Kommunikationsnetz (10) zu arbeiten, wobei der dritte Knoten (113) ferner zu Folgendem konfiguriert ist:

- Empfangen, in Echtzeit, einer zweiten Angabe von einem ersten Knoten (111), der dazu konfiguriert ist, in dem Kommunikationsnetz (10) zu arbeiten, wobei die zweite Angabe dazu konfiguriert ist, anzugeben, ob vorausgesagt wird, dass ein jeweiliger Dienstqualitätsschwellenwert in jeweiliger Kommunikation, die dazu konfiguriert ist, einer oder mehreren Kommunikationsvorrichtungen (130) bereitgestellt zu werden, die dazu konfiguriert sind, in dem Kommunikationsnetz (10) zu arbeiten, überschritten wird oder unterdurchschnittlich ist oder nicht, und
- Initiieren (303) einer Neuverteilung einer Bandbreite, die in dem Kommunikationsnetz (10) verfügbar ist, an mindestens eine von der einen oder den mehreren Kommunikationsvorrichtungen 130, wobei die Initiierung (303) der Neuverteilung dazu konfiguriert ist, auf der zweiten Angabe zu basieren, die dazu konfiguriert ist, empfangen zu werden, wobei das Initiieren (303) der Neuverteilung der Bandbreite Bereitstellen einer dritten Angabe an mindestens eine von der einen oder den mehreren Kommunikationsvorrichtungen 130, die in dem Kommunikationsnetz (10) arbeiten, umfasst, wobei die dritte Angabe eine Möglichkeit angibt, eine Änderung durchzuführen, um die Dienstqualität von mindestens einer von der einen oder den mehreren Kommunikationsvorrichtungen 130 zu erhöhen oder zu verringern.

**Revendications**

1. Procédé, réalisé par un premier nœud (111), le procédé étant destiné à prendre en charge la qualité de service dans un réseau de communications (10), le premier nœud (111) exploitant le réseau de communications (10), le procédé comprenant :

- *la détermination* (205), en temps réel, de si oui ou non un seuil de qualité de service respectif est prédit comme étant dépassé ou non atteint dans des communications respectives fournies à un ou plusieurs dispositifs de communication (130) exploités dans le réseau de communications (10), la détermination (205) étant basée sur une ou plusieurs premières indications reçues, en temps réel, provenant d'un ou plusieurs deuxièmes nœuds (112) exploités dans le réseau de communications (100), les une ou plusieurs premières indications indiquant, en temps réel, un ou plusieurs paramètres de qualité de service respectifs pour les communications respectives fournies aux un ou plusieurs dispositifs de communication 130, et
- *l'initiation* (206) d'une redistribution d'une largeur de bande disponible dans le réseau de communications (10) vers au moins un des un ou plusieurs dispositifs de communication 130, l'initiation (206) de la redistribution étant basée sur un résultat de la détermination, dans lequel l'initiation (206) de la redistribution de la largeur de bande comprend l'initiation de la fourniture d'une deuxième indication à un troisième nœud (113) exploité dans le réseau de communications (10), la deuxième indication indiquant un résultat de la détermination.

2. Procédé selon la revendication 1, dans lequel la redistribution de la largeur de bande est en temps réel.

**3.** Procédé selon la revendication 1, le procédé comprenant en outre :

- *la réception* (200) d'un abonnement provenant du troisième nœud (113) pour recevoir la deuxième indication en temps réel, et dans lequel la fourniture de la deuxième indication est basée sur l'abonnement reçu.

**4.** Procédé selon les revendications 1 ou 3, dans lequel la deuxième indication comprend au moins un parmi :

a. une consommation de données par au moins un parmi : zone géographique, une zone de couverture radio, une tranche de réseau, un dispositif de communication (130), et/ou un groupe de dispositifs de communication (130),
b. un type de données utilisées,
c. une utilisation de données de liaison montante et/ou de liaison descendante par dispositif de communication (130) et/ou par groupe de dispositifs de communication (130),
d. une qualité de service provisionnée pour des sessions de données par dispositif de communication (130) et/ou par groupe de dispositifs de communication (130), et
e. des données d'utilisation d'application par dispositif de communication (130) et/ou par groupe de dispositifs de communication (130).

**5.** Procédé selon l'une quelconque des revendications 1 à 4, dans lequel le procédé comprenant en outre :

a) un parmi :

- *l'abonnement* (201a) auprès des un ou plusieurs deuxièmes nœuds (112) pour recevoir les une ou plusieurs premières indications en temps réel, et
- *l'envoi* (201b) d'une ou plusieurs demandes aux un ou plusieurs deuxièmes nœuds (112) pour recevoir les une ou plusieurs premières indications en temps réel, et

b)

- *la réception* (202) des une ou plusieurs premières indications en temps réel provenant des un ou plusieurs deuxièmes nœuds (112) sur la base d'un parmi :

a) les un ou plusieurs abonnements, et
b) les une ou plusieurs demandes envoyées, dans lequel les une ou plusieurs premières indications sont reçues sous la forme d'une ou plusieurs réponses.

**6.** Procédé selon la revendication 5, dans lequel la deuxième indication comprend au moins un parmi :

a. une consommation de données par zone géographique, dispositif de communication (130), groupe de dispositifs de communication (130) et/ou par zone de couverture radio reçue provenant d'une fonction de gestion de session, SMF,
b. un type de données utilisées provenant d'une SMF,
c. une utilisation de données de liaison montante et/ou de liaison descendante par dispositif de communication (130) et/ou par groupe de dispositifs de communication (130) provenant d'une SMF,
d. une qualité de service provisionnée pour des sessions de données par dispositif de communication (130) et/ou par groupe de dispositifs de communication (130) reçue provenant d'une fonction de contrôle de politique, PCF, et
e. des données d'utilisation d'application par dispositif de communication (130) et/ou par groupe de dispositifs de communication (130) reçues provenant d'une fonction d'application, AF.

**7.** Procédé selon l'une quelconque des revendications 5 et 6, le procédé comprenant en outre un parmi :

- *la modification* (202) d'au moins un des un ou plusieurs abonnements, et
- *la suppression* (203) d'au moins un des un ou plusieurs abonnements, et dans lequel les une ou plusieurs premières indications reçues sont en outre basées sur l'au moins un des un ou plusieurs abonnements modifiés ou supprimés.

**8.** Procédé selon l'une quelconque des revendications 1 à 7, dans lequel le premier nœud (111) est une fonction d'analyse de données de réseau, NWDAF, les un ou plusieurs deuxièmes nœuds (112) comprennent au moins l'une parmi : une SMF, une fonction de plan utilisateur, UPF, une AF, et une PCF, et le troisième nœud (113) est une fonction de tarification convergée, CHF.

**9.** Procédé selon l'une quelconque des revendications 1 à 8, dans lequel le premier nœud (111) est une fonction de gestion et d'analyse de données, MDAF, les un ou plusieurs deuxièmes nœuds (112) comprennent au moins l'une parmi : une SMF, une UPF, une AF, et une PCF, le troisième nœud (113) is une CHF, et dans lequel le premier nœud (111) reçoit les une ou plusieurs premières indications via une NWDAF.

**10.** Procédé, réalisé par un troisième nœud (113), le procédé étant destiné à prendre en charge la qualité de service dans un réseau de communications (10), le troisième nœud (113) exploitant le réseau de communications (10), le procédé comprenant :

- *la réception* (302), en temps réel, d'une deuxième indication provenant d'un premier nœud (111) exploité dans le réseau de communications (10), la deuxième indication indiquant si oui ou non un seuil de qualité de service respectif est prédit comme étant dépassé ou non atteint dans des communications respectives fournies à un ou plusieurs dispositifs de communication (130) exploités dans le réseau de communications (10), et
- *l'initiation* (303) d'une redistribution d'une largeur de bande disponible dans le réseau de communications (10) vers au moins un des un ou plusieurs dispositifs de communication 130, l'initiation (303) de la redistribution étant basée sur la deuxième indication reçue, dans lequel l'initiation (303) de la redistribution de la largeur de bande comprend la fourniture d'une troisième indication à au moins un des un ou plusieurs dispositifs de communication 130, exploité dans le réseau de communications (10), la troisième indication indiquant une possibilité de réaliser un changement pour augmenter ou diminuer la qualité de service d'au moins un des un ou plusieurs dispositifs de communication 130.

**11.** Procédé selon la revendication 10, le procédé comprenant en outre :

- *la réception* (304) en temps réel et en réponse à la troisième indication envoyée, d'une quatrième indication provenant d'au moins un des un ou plusieurs dispositifs de communication 130, la quatrième indication indiquant si l'au moins un des un ou plusieurs dispositifs de communication 130 accepte ou rejette la possibilité de réaliser le changement pour augmenter ou diminuer la qualité de service, et
- *la redistribution* (305) de la largeur de bande disponible dans le réseau de communications (10), sur la base de la quatrième indication reçue.

**12.** Procédé selon l'une quelconque des revendications 10 et 11, le procédé comprenant en outre :

- *l'abonnement* (301) auprès du premier nœud (111) pour recevoir la deuxième indication en temps réel, et dans lequel la réception de la deuxième indication est basée sur l'abonnement.

**13.** Procédé selon la revendication 12, dans lequel la deuxième indication indique en outre au moins un parmi :

    a. une consommation de données par zone géographique, dispositif de communication (130) et/ou par groupe de dispositifs de communication (130), et/ou par zone de couverture radio reçue provenant d'une fonction de gestion de session, SMF,
    b. un type de données utilisées provenant d'une SMF,
    c. une utilisation de données de liaison montante et/ou de liaison descendante par dispositif de communication (130) et/ou par groupe de dispositifs de communication (130) reçue provenant d'une SMF,
    d. une qualité de service provisionnée pour des sessions de données par dispositif de communication (130) et/ou par groupe de dispositifs de communication (130) reçue provenant d'une fonction de contrôle de politique, PCF, et
    e. des données d'utilisation d'application par dispositif de communication (130) et/ou par groupe de dispositifs de communication (130) reçues provenant d'une fonction d'application, AF.

**14.** Procédé selon l'une quelconque des revendications 12 et 13, dans lequel le premier nœud (111) est une fonction de gestion et d'analyse de données, MDAF, et le troisième nœud (113) est une fonction de tarification convergée, CHF.

**15.** Premier nœud (111), destiné à prendre en charge la qualité de service dans un réseau de communications (10), le premier nœud (111) étant configuré pour être exploité dans le réseau de communications (10), le premier nœud (111) étant en outre configuré pour :

- déterminer, en temps réel, si oui ou non un seuil de qualité de service respectif est prédit comme étant dépassé ou non atteint dans des communications respectives configurées pour être fournies à un ou plusieurs dispositifs de communication (130) exploités dans le réseau de communications (10), la détermination étant configurée pour être basée sur une ou plusieurs premières indications configurées pour être reçues, en temps réel, provenant d'un ou plusieurs deuxièmes nœuds (112) configurés pour être exploités dans le réseau de communications (100), les une ou plusieurs premières indications étant configurées pour indiquer, en temps réel, un ou plusieurs paramètres de qualité de service respectifs pour les communications respectives configurées pour être fournies aux un ou plusieurs dispositifs de communication 130, et

- initier une redistribution d'une largeur de bande disponible dans le réseau de communications (10) vers au moins un des un ou plusieurs dispositifs de communication 130, l'initiation de la redistribution étant configurée pour être basée sur un résultat de la détermination, dans lequel l'initiation de la redistribution de la largeur de bande comprend l'initiation de la fourniture d'une deuxième indication à un troisième nœud (113) exploité dans le réseau de communications (10), la deuxième indication indiquant un résultat de la détermination.

16. troisième nœud (113), destiné à prendre en charge la qualité de service dans un réseau de communications (10), le troisième nœud (113) étant configuré pour être exploité dans le réseau de communications (10), le troisième nœud (113) étant en outre configuré pour :

- recevoir, en temps réel, une deuxième indication provenant d'un premier nœud (111) configuré pour être exploité dans le réseau de communications (10), la deuxième indication étant configurée pour indiquer si oui ou non un seuil de qualité de service respectif est prédit comme étant dépassé ou non atteint dans des communications respectives configurées pour être fournies à un ou plusieurs dispositifs de communication (130) configurés pour être exploités dans le réseau de communications (10), et

- initier (303) une redistribution d'une largeur de bande disponible dans le réseau de communications (10) vers au moins un des un ou plusieurs dispositifs de communication 130, l'initiation (303) de la redistribution étant configurée pour être basée sur la deuxième indication configurée pour être reçue, dans lequel l'initiation (303) de la redistribution de la largeur de bande comprend la fourniture d'une troisième indication à au moins un des un ou plusieurs dispositifs de communication 130, exploité dans le réseau de communications (10), la troisième indication indiquant une possibilité de réaliser un changement pour augmenter ou diminuer la qualité de service d'au moins un des un ou plusieurs dispositifs de communication 130.

a)

b)

Figure 1

```
                              ┌─────────┐
                              │  Start  │─────────────────────────────┐
                              └─────────┘                             │
                                   │                                  │
    ┌ ─ ─ ─ ─ ─ ─ ─ ─ ─ ─ ─ ─ ─ ─ ▼ ─ ─ ─ ─ ─ ─ ─ ─ ─ ─ ─ ─ ─ ─ ┐   │
      200. Receive a subscription from the third node                 │
    └ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘   │
                                   │                                  │
    ┌ ─ ─ ─ ─ ─ ─ ─ ─ ─ ─ ─ ─ ─ ─ ▼ ─ ─ ─ ─ ─ ─ ─ ─ ─ ─ ─ ─ ─ ─ ┐   │
      201. Subscribe/send the requests to receive                     │
                  the first indications                               │
    └ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘   │
                                   │                                  │
      ┌ ─ ─ ─ ─ ─ ─ ─ ─ ─ ─ ─ ─ ─ ▼ ─ ─ ─ ─ ─ ─ ─ ─ ─ ─ ─ ─ ─ ┐     │
        202. Receive the first indications                            │
      └ ─ ─ ─ ─ ─ ─ ─ ─ ─ ─ ─ ─ ─ ─ ─ ─ ─ ─ ─ ─ ─ ─ ─ ─ ─ ─ ─ ┘     │
                                   │                                  │
        ┌ ─ ─ ─ ─ ─ ─ ─ ─ ─ ─ ─ ─ ▼ ─ ─ ─ ─ ─ ─ ─ ─ ─ ─ ─ ┐         │
          203. Change the subscriptions                               │
        └ ─ ─ ─ ─ ─ ─ ─ ─ ─ ─ ─ ─ ─ ─ ─ ─ ─ ─ ─ ─ ─ ─ ─ ─ ┘         │
                                   │                                  │
        ┌ ─ ─ ─ ─ ─ ─ ─ ─ ─ ─ ─ ─ ▼ ─ ─ ─ ─ ─ ─ ─ ─ ─ ─ ─ ┐         │
          204. Delete the subscriptions                               │
        └ ─ ─ ─ ─ ─ ─ ─ ─ ─ ─ ─ ─ ─ ─ ─ ─ ─ ─ ─ ─ ─ ─ ─ ─ ┘         │
                                   │                                  │
    ┌──────────────────────────────▼──────────────────────────────────▼┐
    │ 205. Determine whether the threshold is exceeded or underachieved │
    └──────────────────────────────┬───────────────────────────────────┘
                                   │
              ┌────────────────────▼────────────────────┐
              │      206. Initiate the redistribution    │
              └────────────────────┬────────────────────┘
                                   │
                              ┌────▼────┐
                              │   End   │
                              └─────────┘
```

# Figure 2

```
                          ┌───────┐
                       ┌──│ Start │──────────────────────┐
                       │  └───────┘                       │
                       ▼                                   │
    ┌ ─ ─ ─ ─ ─ ─ ─ ─ ─▼─ ─ ─ ─ ─ ─ ─ ─ ─ ─ ─ ─ ─ ─ ┐    │
      301. Subscribe to receive the second indication       │
    └ ─ ─ ─ ─ ─ ─ ─ ─ ─┬─ ─ ─ ─ ─ ─ ─ ─ ─ ─ ─ ─ ─ ─ ┘    │
                       ▼                                   │
    ┌─────────────────────────────────────────────┐        │
    │      302. Receive the second indication      │◄───────┘
    └─────────────────────┬───────────────────────┘
                          ▼
    ┌─────────────────────────────────────────┐
    │       303. Initiate the redistribution   │───────────┐
    └─────────────────────┬───────────────────┘            │
    ┌ ─ ─ ─ ─ ─ ─ ─ ─ ─ ─▼─ ─ ─ ─ ─ ─ ─ ─ ─ ─ ┐          │
        304. Receive the fourth indication                  │
    └ ─ ─ ─ ─ ─ ─ ─ ─ ─ ─┬─ ─ ─ ─ ─ ─ ─ ─ ─ ─ ┘          │
    ┌ ─ ─ ─ ─ ─ ─ ─ ─ ─ ─▼─ ─ ─ ─ ─ ─ ─ ─ ─ ─ ┐          │
        305. Redistribute the bandwidth                     │
    └ ─ ─ ─ ─ ─ ─ ─ ─ ─ ─┬─ ─ ─ ─ ─ ─ ─ ─ ─ ─ ┘          │
                          ▼                                  │
                      ┌───────┐                              │
                      │  End  │◄─────────────────────────────┘
                      └───────┘
```

# Figure 3

Figure 4

**Figure 5**

EP 4 245 062 B1

CHF
Predictive charging
performed based on
analytics data
—113

300
Registers for
Analytics data
via NWDAF

MWDAF

601 Subscribes
directly for
specific
events

111

NWDAF

202
Collects analytics data
from each NF (CPU
Load, Users activities,
User density per
Tracking Area, Data
consumption)

—111

PCF

SMF

NEF

AF

—112

—112

—112

—112

Figure 6

**Figure 7**

Figure 8

Figure 9

Figure 10

Figure 11

Figure 12

Figure 13

a)

First node 111

1401. Determining unit

1402. Initiating unit

1403. Receiving unit

1404. Subscribing unit

1405. Sending unit

1406. Changing unit

1407. Deleting unit

1408. Processor

1410. Receiving port

1409. Memory

1411. Sending port

1413 — COMPUTER-READABLE MEDIUM ← PROGRAM — 1412

b)

First node 111

1414. Radio circuitry

1408. Processing circuitry

1410. Receiving port

1409. Memory

1411. Sending port

1413 — COMPUTER-READABLE MEDIUM ← PROGRAM — 1412

Figure 14

a)

Third node 113

1501. Receiving unit

1502. Initiating unit

1503. Receiving unit

1504. Redistributing unit

1505. Subscribing unit

1506. Processor

1508. Receiving port

1507. Memory

1509. Sending port

1511 COMPUTER-READABLE MEDIUM ← PROGRAM 1510

b)

Third node 113

1508. Receiving port

1512. Radio circuitry

1506. Processing circuitry

1507. Memory

1509. Sending port

1511 COMPUTER-READABLE MEDIUM ← PROGRAM 1510

**Figure 15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8867390 B2

- WO 2019196796 A1